# EUROPEAN PATENT APPLICATION

(11) **EP 4 818 853 A1**
(43) Date of publication of application: **07.10.2026**
(21) Application number: 26158280.3
(22) Date of filing: 12.02.2026
(51) Int. Cl.: G06F 1/3206, G06F 1/3212, G06F 1/324, G06F 1/3234, G06F 1/3287, G06F 1/3296, H04W 52/02

(54) **METHOD AND APPARATUS FOR CONTROLLING POWER CONSUMPTION, ELECTRONIC DEVICE, CHIP, AND STORAGE MEDIUM**

(30) Priority: 03.04.2025 CN 202510423429
(71) Applicant: Beijing X-Ring Technology Co., Ltd., Beijing 100085 (CN)
(72) Inventor: WU, Xuecheng, Beijing, 100085 (CN); SUN, Zhaosheng, Beijing, 100085 (CN); LIU, Long, Beijing, 100085 (CN); WANG, Tao, Beijing, 100085 (CN); BAI, Xubin, Beijing, 100085 (CN); ZHENG, Shaobo, Beijing, 100085 (CN); DING, Chongchong, Beijing, 100085 (CN); QU, Xiao, Beijing, 100085 (CN); SONG, Wenlin, Beijing, 100085 (CN)
(74) Representative: Stöckeler, Ferdinand

(57) **Abstract**

This application provides a method and an apparatus for controlling power consumption, an electronic device, a chip, and a storage medium. The method includes: based on a current allocable power of an electronic device, dynamically adjusting a power for a component of a first type in the electronic device, which achieves flexible power consumption control based on the allocable power. Under a premise of meeting a power consumption requirement of a target scenario, an optimal ratio of power allocation is achieved. When a device in the related art and a device in the present invention are in the same battery state, the device in the present invention has a better performance and a longer battery life compared to the device in the related art in the same target scenario. Meanwhile, by intelligently and dynamically adjusting the power consumption, refined management of the power consumption is realized, and thus overall machine performance is improved.

## Description

### TECHNICAL FIELD

The present invention relates to a field of intelligent control technology, and specifically to a method and an apparatus for controlling power consumption, an electronic device, a chip, and a storage medium.

### BACKGROUND

With popularization of smart devices, power management has become one of key technologies for improving a battery life of the device. Existing power management solutions are mostly realized by adopting a fixed frequency-limiting power consumption threshold, which struggles to adapt to complex and changing usage scenarios.

### SUMMARY

The present invention aims to solve one of technical problems in the related art to at least some extent.

Accordingly, the present invention provides a method and an apparatus for controlling power consumption, an electronic device, a chip, and a storage medium, which improves accuracy of power consumption adjustment via a dynamic control strategy.

According to a first aspect of the embodiments of the present invention, a method for controlling power consumption is provided, including:
performing, based on an allocable power of an electronic device, power allocation for a component of a first type in the electronic device to meet a power consumption requirement of a target scenario, in which the component of the first type includes a system-on-chip.

In an implementation, the method further comprises:
determining the allocable power according to battery state information of the electronic device.

In an implementation, performing, based on the allocable power of the electronic device, the power allocation for the component of the first type in the electronic device comprises:
determining a power required by a component of a second type in the electronic device;
determining an available power of the component of the first type according to the allocable power of the electronic device and the power required by the component of the second type; and
performing the power allocation for the component of the first type based on the available power of the component of the first type.

In an implementation, the component of the second type comprises a basic component of the electronic device.

In an implementation, performing the power allocation for the component of the first type based on the available power of the component of the first type comprises:
determining an allocation strategy for performing the power allocation for the component of the first type; and
performing the power allocation for the component of the first type based on the allocation strategy and the available power of the component of the first type.

In an implementation, the allocation strategy comprises at least one of:
a power-on/power-off processing manner; or
a working frequency adjustment manner.

In an implementation, performing the power allocation for the component of the first type based on the allocation strategy and the available power of the component of the first type comprises:
in response to the allocation strategy comprising the power-on/power-off processing manner, performing power-on/power-off processing for at least a part of components in components of the first type based on the available power of the components of the first type.

In an implementation, the method further comprises:
in response to there being a component of the first type in a powered-on state, performing a working frequency adjustment for the component of the first type in the powered-on state based on the available power.

In an implementation, there are at least two components of the first type, and performing the power allocation for the component of the first type based on the allocation strategy and the available power of the component of the first type comprises:
in response to the allocation strategy comprising the working frequency adjustment manner, determining frequency adjustment priorities of the at least two components of the first type; and
performing a working frequency adjustment for at least one component of the first type according to the available power and the frequency adjustment priorities of the at least two components of the first type.

In an implementation, determining the frequency adjustment priorities of the at least two components of the first type comprises:
obtaining a power consumption benefit corresponding to a frequency adjustment of each component of the first type; and In an implementation, determining the frequency adjustment priorities of the at least two components of the first type comprises:
determining the frequency adjustment priorities of the at least two components of the first type according to the target scenario.

In an implementation, performing the working frequency adjustment for the at least one component of the first type according to the available power and the frequency adjustment priorities of the at least two components of the first type comprises:
determining a frequency adjustment direction according to the available power; and
adjusting, according to the frequency adjustment priorities, the at least one component of the first type to an expected working frequency along the frequency adjustment direction, wherein the expected working frequency is determined based on the target scenario.

In an implementation, performing the working frequency adjustment for the at least one component of the first type according to the available power and the frequency adjustment priorities of the at least two components of the first type comprises:
determining a frequency adjustment direction according to the available power; and
performing the working frequency adjustment along the frequency adjustment direction according to the frequency adjustment priorities and according to a target energy efficiency working frequency of the at least one component of the first type, until a working frequency of the at least one component of the first type is adjusted to the target energy efficiency working frequency or a total power of the components of the first type in the electronic device is less than or equal to the available power.

In an implementation, performing the working frequency adjustment for the at least one component of the first type according to the available power and the frequency adjustment priorities of the at least two components of the first type comprises:
determining a frequency adjustment direction according to the available power; and
performing the working frequency adjustment for the at least one component of the first type along the frequency adjustment direction according to the frequency adjustment priorities and according to an extreme value working frequency of the at least one component of the first type, until a working frequency of the at least one component of the first type is adjusted to the extreme value working frequency or a total power of the components of the first type in the electronic device is less than or equal to the available power.

In an implementation, determining the frequency adjustment direction according to the available power comprises:
determining a current power corresponding to the at least two components of the first type according to current working parameters of the at least two components of the first type; and
determining the frequency adjustment direction according to a magnitude relationship between the current power and the available power.

In an implementation, the target energy efficiency working frequency being determined based on the target scenario.

In an implementation, the method further comprises:
in response to the allocable power being less than a preset threshold, adjusting a maximum working frequency of the at least one component of the first type according to the target scenario and the allocable power, wherein an adjusted maximum working frequency is configured to determine a maximum working frequency in a frequency-increasing scenario.

In an implementation, the component of the first type comprises a core corresponding to at least one processor of a graphics processing unit (GPU), a neural processing unit (NPU), a central processing unit (CPU), a data processing unit (DPU), or an image signal processor (ISP).According to a second aspect of the embodiments of the present invention, a method for controlling power consumption is provided, including:
determining an allocable power of an electronic device according to battery state information of the electronic device;
determining a power required by a basic component in the electronic device;
determining an available power for a system-on-chip according to the allocable power of the electronic device and the power required by the basic component, in which the system-on-chip includes a plurality of processor cores; and
performing a working frequency adjustment for at least one processor core according to the available power and frequency adjustment priorities of the plurality of processor cores, or performing power-on/power-off processing for the at least one processor core based on the available power.

In an implementation, the method further comprises:
obtaining a power consumption benefit corresponding to a frequency adjustment of each of the plurality of processor cores; and
determining the frequency adjustment priorities of the plurality of processor cores according to a power consumption benefit corresponding to frequency adjustments of the plurality of processor cores.

In an implementation, the method further comprises:
determining the frequency adjustment priorities of the plurality of processor cores according to a target scenario.

In an implementation, performing the working frequency adjustment for the at least one processor core according to the available power and the frequency adjustment priorities of the plurality of processor cores comprises:
determining a frequency adjustment direction according to the available power; and
adjusting, according to the frequency adjustment priorities, the at least one processor core to an expected working frequency along the frequency adjustment direction, wherein the expected working frequency is determined based on the target scenario.

23. The method of any one of claims 19 to 21, wherein performing the working frequency adjustment for the at least one processor core according to the available power and the frequency adjustment priorities of the plurality of processor cores comprises:
determining a frequency adjustment direction according to the available power; and
performing the working frequency adjustment along the frequency adjustment direction according to the frequency adjustment priorities and according to a target energy efficiency working frequency of the at least one processor core, until a working frequency of the at least one processor core is adjusted to the target energy efficiency working frequency or a total power of the plurality of processor cores in the electronic device is less than or equal to the available power.

In an implementation, performing the working frequency adjustment for the at least one processor core according to the available power and the frequency adjustment priorities of the plurality of processor cores comprises:
determining a frequency adjustment direction according to the available power; and
performing the working frequency adjustment for the at least one processor core along the frequency adjustment direction according to the frequency adjustment priorities and according to an extreme value working frequency of the at least one processor core, until a working frequency of the at least one processor core is adjusted to the extreme value working frequency or a total power of the plurality of processor cores in the electronic device is less than or equal to the available power.

In an implementation, the plurality of processor cores comprise a core corresponding to at least one processor of a graphics processing unit (GPU), a neural processing unit (NPU), a central processing unit (CPU), a data processing unit (DPU), or an image signal processor (ISP).

According to a third aspect of the embodiments of the present invention, an apparatus for controlling power consumption is provided, including:
a processing module, configured to perform, based on an allocable power of an electronic device, power allocation for a component of a first type in the electronic device to meet a power consumption requirement of a target scenario, in which the component of the first type includes a system-on-chip.

In an implementation, the apparatus further comprises a determining module, configured to:
determine the allocable power according to battery state information of the electronic device.

In an implementation, the processing module is further configured to:
determine a power required by a component of a second type in the electronic device;
determine an available power of the component of the first type according to the allocable power of the electronic device and the power required by the component of the second type; and
perform the power allocation for the component of the first type based on the available power of the component of the first type.

In an implementation, the processing module is further configured to:
determine an allocation strategy for performing the power allocation for the component of the first type; and
perform the power allocation for the component of the first type based on the allocation strategy and the available power of the component of the first type.

In an implementation, the processing module is further configured to:
in response to the allocation strategy comprising a power-on/power-off processing manner, perform power-on/power-off processing for at least a part of components in components of the first type based on the available power of the components of the first type.

In an implementation, the processing module is further configured to:
in response to there being a component of the first type in a powered-on state, perform a working frequency adjustment for the component of the first type in the powered-on state based on the available power.

In an implementation, there are at least two components of the first type, and the processing module is further configured to:
in response to the allocation strategy comprising the working frequency adjustment manner, determine frequency adjustment priorities of the at least two components of the first type; and
perform a working frequency adjustment for at least one component of the first type according to the available power and the frequency adjustment priorities of the at least two components of the first type.

In an implementation, the processing module is further configured to:
obtain a power consumption benefit corresponding to a frequency adjustment of each component of the first type; and
determine the frequency adjustment priorities of the at least two components of the first type according to a power consumption benefit corresponding to frequency adjustments of the at least two components of the first type.

In an implementation, the processing module is further configured to:
determine the frequency adjustment priorities of the at least two components of the first type according to the target scenario.

In an implementation, the processing module is further configured to:
determine a frequency adjustment direction according to the available power; and
adjust, according to the frequency adjustment priorities, the at least one component of the first type to an expected working frequency along the frequency adjustment direction, wherein the expected working frequency is determined based on the target scenario.

In an implementation, the processing module is further configured to:
determine a frequency adjustment direction according to the available power; and
perform the working frequency adjustment along the frequency adjustment direction according to the frequency adjustment priorities and according to a target energy efficiency working frequency of the at least one component of the first type, until a working frequency of the at least one component of the first type is adjusted to the target energy efficiency working frequency or a total power of the components of the first type in the electronic device is less than or equal to the available power.

In an implementation, the processing module is further configured to:
determine a frequency adjustment direction according to the available power; and
perform the working frequency adjustment for the at least one component of the first type along the frequency adjustment direction according to the frequency adjustment priorities and according to an extreme value working frequency of the at least one component of the first type, until a working frequency of the at least one component of the first type is adjusted to the extreme value working frequency or a total power of the components of the first type in the electronic device is less than or equal to the available power.

According to a fourth aspect of the embodiments of the present invention, an apparatus for controlling power consumption is provided, including:
a first determining module, configured to determine an allocable power of an electronic device according to battery state information of the electronic device;
a second determining module, configured to determine a power required by a basic component in the electronic device;
a third determining module, configured to determine an available power for a system-on-chip according to the allocable power of the electronic device and the power required by the basic component, in which the system-on-chip includes a plurality of processor cores; and
an adjusting module, configured to perform a working frequency adjustment for at least one processor core according to the available power and frequency adjustment priorities of the plurality of processor cores, or perform power-on/power-off processing for at least one processor core based on the available power.

In an implementation, the apparatus further comprises a fourth determining module, configured to:
obtain a power consumption benefit corresponding to a frequency adjustment of each of the plurality of processor cores; and
determine the frequency adjustment priorities of the plurality of processor cores according to power consumption benefit corresponding to frequency adjustments of the plurality of processor cores.

In an implementation, the fourth determining module is further configured to:
determine the frequency adjustment priorities of the plurality of processor cores according to a target scenario.

In an implementation, the adjusting module is further configured to:
determine a frequency adjustment direction according to the available power; and
adjust, according to the frequency adjustment priorities, the at least one processor core to an expected working frequency along the frequency adjustment direction, wherein the expected working frequency is determined based on the target scenario.

In an implementation, the adjusting module is further configured to:
determine a frequency adjustment direction according to the available power; and
perform the working frequency adjustment along the frequency adjustment direction according to the frequency adjustment priorities and according to a target energy efficiency working frequency of the at least one processor core, until a working frequency of the at least one processor core is adjusted to the target energy efficiency working frequency or a total power of the plurality of processor cores in the electronic device is less than or equal to the available power.

In an implementation, the adjusting module is further configured to:
determine a frequency adjustment direction according to the available power; and
perform the working frequency adjustment for the at least one processor core along the frequency adjustment direction according to the frequency adjustment priorities and according to an extreme value working frequency of the at least one processor core, until a working frequency of the at least one processor core is adjusted to the extreme value working frequency or a total power of the plurality of processor cores in the electronic device is less than or equal to the available power.

According to a fifth aspect of the embodiments of the present invention, an electronic device is provided, including a memory, a processor, and a computer program stored in the memory and executable on the processor, in which the processor implements the method of any above aspect when executing the computer program.

According to a sixth aspect of the embodiments of the present invention, a non-transitory computer-readable storage medium storing a computer program is provided. When the computer program is executed by a processor, the method of any above aspect is implemented.

According to a seventh aspect of the embodiments of the present invention, a chip is provided, including a component of a first type and a processor, in which the processor is configured to receive a signal from a memory of an electronic device and the signal includes computer instructions stored in the memory. When the computer instructions are executed by the processor, the electronic device is caused to implement the method of any above aspect.

According to an eighth aspect of the embodiments of the present invention, a computer program product storing a computer program is provided. When the program is executed by a processor, the method of any above aspect is implemented.

In the method and the apparatus for controlling power consumption, the electronic device, the chip, and the storage medium in the present invention, based on the current allocable power of the electronic device, the power of the component of the first type in the electronic device is dynamically adjusted, which achieves flexible power consumption control based on the allocable power. Under a premise of meeting the power consumption requirement of the target scenario, an optimal ratio of the power allocation is achieved. When a device in the related art and a device in the present invention are in the same battery state, the device in the present invention has a better performance and a longer battery life compared to the device in the related art in the same target scenario. Meanwhile, by intelligently and dynamically adjusting the power consumption, refined management of the power consumption is realized, and thus overall machine performance is improved.

Additional aspects and advantages of the present invention will be given in part in the following descriptions, become apparent in part from the following descriptions, or be learned from the practice of the present invention.

### BRIEF DESCRIPTION OF THE DRAWINGS

The above and/or other aspects and advantages of embodiments of the present invention will become apparent and more readily appreciated from the following descriptions made with reference to the accompanying drawings.
FIG. 1 is a flowchart of a method for controlling power consumption according to an embodiment of the present invention.
FIG. 2 is a flowchart of a method for controlling power consumption according to an embodiment of the present invention.
FIG. 3 is a schematic diagram of a principle of power consumption control according to an embodiment of the present invention.
FIG. 4 is a flowchart of a method for controlling power consumption according to an embodiment of the present invention.
FIG. 5 is a flowchart of a method for controlling power consumption according to an embodiment of the present invention.
FIG. 6 is a flowchart of a method for controlling power consumption according to an embodiment of the present invention.
FIG. 7 is a flowchart of a method for controlling power consumption according to an embodiment of the present invention.
FIG. 8 is a flowchart of a method for controlling power consumption according to an embodiment of the present invention.
FIG. 9 is a flowchart of a method for controlling power consumption according to an embodiment of the present invention.
FIG. 10 is a flowchart of a method for controlling power consumption according to an embodiment of the present invention.
FIG. 11 is a block diagram of an apparatus for controlling power consumption according to an embodiment of the present invention.
FIG. 12 is a block diagram of an apparatus for controlling power consumption according to an embodiment of the present invention.
FIG. 13 is a block diagram of an electronic device according to an embodiment of the present invention.

### DETAILED DESCRIPTION

The embodiments of the present invention are described in detail below. Examples of the embodiments are shown in the accompanying drawings, in which the same or similar labels throughout the present invention represent the same or similar elements or elements having the same or similar functions. The embodiments below with reference to the accompanying drawings are exemplary and are intended to explain the present invention, but should not be construed as a limitation to the present invention.

In the related art, power consumption control of the electronic device mostly adopts a fixed limitation strategy, which may not achieve precise adjustment and results in performance degradation or power waste in certain scenarios. Accordingly, the embodiments of the present invention provide a method and an apparatus for controlling power consumption, an electronic device, a chip, and a storage medium. Based on a current allocable power of an electronic device, a power of a component of a first type in the electronic device is dynamically adjusted, which achieves flexible power consumption control based on the allocable power. Under a premise of meeting a power consumption requirement of a target scenario, an optimal ratio of the power allocation is achieved. When a device in the related art and a device in the present invention are in the same battery state, the device in the present invention has a better performance and a longer battery life compared to the device in the related art in the same target scenario. By intelligently and dynamically adjusting the power consumption, refined management of the power consumption is realized, and thus overall machine performance is improved.

The method and the apparatus for controlling power consumption, the electronic device, the chip, and the storage medium according to the embodiments of the present invention are described below with reference to the accompanying drawings.

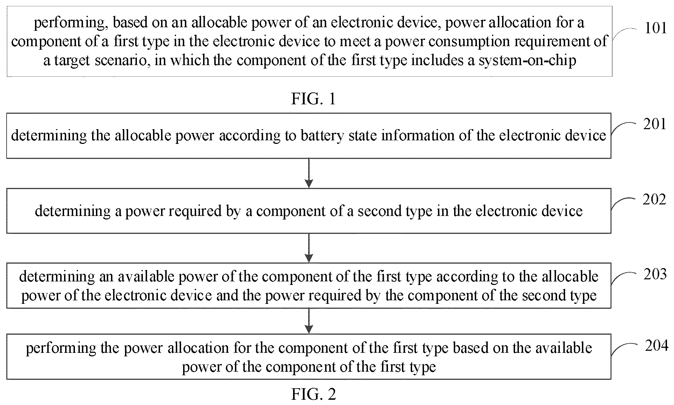

FIG. 1 is a flowchart of a method for controlling power consumption according to an embodiment of the present invention.

As an implementation, the method for controlling power consumption in the embodiments of the present invention may be configured in an apparatus for controlling power consumption, and the apparatus for controlling power consumption may be applied to any electronic device, so that the electronic device may execute a function for controlling power consumption.

The electronic device may be any device with a computing capability, for example, a mobile terminal, and the mobile terminal may be, for example, a mobile phone, a tablet computer, a personal digital assistant, a wearable device, or other hardware devices with various operating systems, touch screens, and/or display screens.

As another implementation, the method for controlling power consumption in the embodiments of the present invention may also be executed by a chip with a processing capability, for example, the chip includes a chip based on a reduced instruction set computing (RISC) architecture, a small core of a central processing unit (CPU), etc., which will not be listed here.

As shown in FIG. 1, the method may include the following step.

At step 101, based on an allocable power of an electronic device, power allocation for a component of a first type in the electronic device is performed to meet a power consumption requirement of a target scenario, in which the component of the first type includes a system-on-chip.

The component of the first type includes a component with adjustable performance or adjustable power, for example, the component of the first type includes a core corresponding to at least one processor of a graphics processing unit (GPU), a neural processing unit (NPU), a central processing unit (CPU), a data processing unit (DPU), or an image signal processor (ISP). The CPU includes at least one of a CPU big core or a CPU medium core. As an example, the component of the first type may be integrated in a system-on-chip (SoC). As an implementation, the CPU big core and the CPU medium core are determined based on the processing capability, and a processing capability of the CPU big core is greater than a processing capability of the CPU medium core.

The target scenario refers to a scenario corresponding to a state of the electronic device, for example, the electronic device is in a standby scenario, in a gaming scenario, in a photography scenario, etc.

In the embodiments of the present invention, the allocable power of the electronic device indicates a level of a power supply capability of the electronic device, or whether power resources are sufficient. Based on the allocable power of the electronic device, the power allocation is performed for the component of the first type in the electronic device, which may adapt to power consumption requirements of the complex and changing target scenarios, achieve matching with actually available power resources, and reduce excessive consumption or resource waste caused by a fixed power allocation manner. Specifically, in case where the allocable power indicates sufficient power resources, power allocated to the component of the first type may be increased, while in case where the allocable power indicates insufficient power resources, the power allocated to the component of the first type may be reduced, which ensures overall machine performance, improves accuracy of power consumption control, and achieves refined management of power consumption control.

In the method for controlling power consumption of the embodiments of the present invention, based on the current allocable power of the electronic device, the power of the component of the first type in the electronic device is dynamically adjusted, which achieves flexible power consumption control based on the allocable power, meets the power consumption requirement of the target scenario, improves the accuracy of power consumption adjustment, and further enhances overall machine performance.

Based on the above embodiment, FIG. 2 is a flowchart of a method for controlling power consumption according to an embodiment of the present invention. As shown in FIG. 2, the method includes the following steps.

At step 201, the allocable power is determined according to battery state information of the electronic device.

In the embodiments of the present invention, the battery state information of the electronic device may be obtained periodically based on a preset querying period, or obtained aperiodically. The battery state information includes at least one of a remaining battery capacity, a battery temperature, or a battery aging condition. Based on state data of the battery in a plurality of dimensions, the allocable power provided by the battery is determined, which improves determination accuracy.

As a first implementation, an active obtaining method may be adopted, which refers to obtaining the battery state information by periodic polling or querying via a service process in the electronic device used for monitoring and managing battery information.

As a second implementation, a passive obtaining method may be adopted, which refers to that a processing unit of the battery sends the battery state information to a service process in a periodic or aperiodic manner.

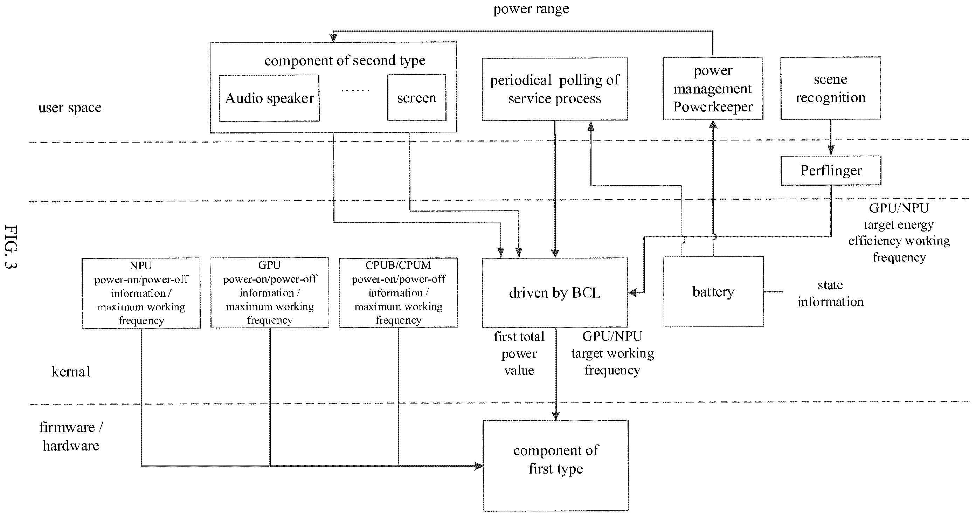

As an example, FIG. 3 is a schematic diagram of a principle of power consumption control according to an embodiment of the present invention. As shown in FIG. 3, the service process periodically polls the battery in the electronic device via a preset interface to obtain battery state information within a current period. The battery state information indicates a power supply capability of the battery. The preset interface includes an interface that may access a kernel layer, for example, a sysfs interface. According to the battery state information queried in the current period and a preset corresponding relationship, the allocable power of the electronic device is determined. A current power supply capability of the battery is positively correlated with the allocable power, that is, the higher the power supply capability is, the higher the allocable power is; and the lower the power supply capability is, the lower the allocable power is. In this way, the power supply capability of the battery may be determined from a plurality of dimensions based on the battery state information obtained in real time, to realize refined determination of the power supply capability of the electronic device, and the allocable power of the electronic device is determined based on the power supply capability, to achieve dynamic determination of the allocable power and improve accuracy of the determination of the allocable power. This refined regulation not only enhances performance of the electronic device but also extends a battery life cycle.

At step 202, a power required by a component of a second type in the electronic device is determined.

The component of the second type includes a basic component in the electronic device. As an example, the component of the second type includes at least one of a peripheral component, a CPU small core, or a baseband chip. The peripheral component includes at least one of a screen, a motor, a speaker, an earpiece, or a camera module.

In one implementation of the embodiments of the present invention, the power required by the component of the second type in the electronic device is a preset power, that is, the power that satisfies basic performance of the electronic device. In other words, when the component of the second type operates at the preset power, the basic performance of the electronic device may be achieved.

In another implementation of the embodiments of the present invention, the power required by the component of the second type in the electronic device is determined according to the allocable power of the electronic device. As an implementation, a plurality of power ranges may be set. According to the allocable power of the electronic device, a power range to which the allocable power of the electronic device belongs is determined. Different power ranges correspond to different powers required by the component of the second type, that is, when available powers are different, it may be determined that powers required by the component of the second type are different, which achieves dynamic adjustment of the power required by the component of the second type under different power supply capabilities. As an example, the power ranges include four ranges, identified as L0 to L3, respectively. Furthermore, as an implementation, according to a power range to which the allocable power of the electronic device belongs, a preset corresponding relationship is queried to determine state information of the component of the second type. The state information indicates a power consumption situation of the component of the second type. Then, according to the state information of the component of the second type, power currently required by the component of the second type is determined. The component of the second type includes at least one component. As a second implementation, according to the allocable power of the electronic device, a preset corresponding relationship is queried to determine the state information of the component of the second type. The state information indicates a power consumption situation of the component of the second type. Then, according to the state information of the component of the second type, the power required by the component of the second type is determined.

In one implementation, in case where the power range to which the allocable power of the electronic device belongs is determined, the power range is broadcast, so that the processing unit determines the state information of the component of the second type according to received broadcast data.

For example, if the power supply capability of the electronic device is poor, the power range to which the allocable power of the electronic device belongs is low, which indicates that a current value of the allocable power of the electronic device is low. Taking a screen of the electronic device as an example, in order to save power, screen brightness needs to be reduced. When the screen brightness is reduced, a power required by the screen also decreases. In this way, power control of the component of the second type is achieved based on the allocable power of the electronic device to meet requirements under different power supply capabilities and improve overall performance of the device.

At step 203, an available power of the component of the first type is determined according to the allocable power of the electronic device and the power required by the component of the second type.

In an implementation of the embodiments of the present invention, the power required by the component of the second type is removed from the allocable power of the electronic device to obtain the available power of the component of the first type. Since the component of the second type is a basic component in the electronic device, the power required by the component of the second type is reserved from the allocable power, that is, the available power of the component of the first type is determined in case of ensuring the operation of the basic component, which achieves dynamic determination of the available power corresponding to the component of the first type based on the allocable power of the electronic device determined in real time while guaranteeing a stable operation of the basic component, thereby optimizing resource allocation, enabling more refined power consumption management, reducing unnecessary resource waste, improving energy efficiency ratio, and simultaneously extending battery life to enhance stability of the whole machine.

At step 204, the power allocation for the component of the first type is performed based on the available power of the component of the first type.

As an example, as shown in FIG. 3, a battery current limit (BCL) module obtains the allocable power of the electronic device and the power required by the component of the second type via a sysfs interface to determine the available power of the component of the first type, and transmits the available power to the SOC via the sysfs interface, so that the SOC performs power allocation for the component of the first type based on the available power, which achieves dynamic power allocation for the component of the first type based on the allocable power of the electronic device that is determined in real time while meeting a basic requirement of the electronic device, realizes refined management of power consumption to meet the power consumption requirement of the target scenario, achieves an optimal ratio of the power allocation, and has better overall machine performance at least under the same available power.

It needs to be noted that power consumption control of the present invention does not depend on activation in a low-power scenario. When the allocable power of the electronic device may be any value, the method for controlling power consumption in the embodiments of the present invention may be used for the power consumption control to meet power allocation requirements in complex scenarios and improve accuracy of the power consumption control.

In the method for controlling power consumption in the embodiments of the present invention, the power supply capability of the battery may be determined from a plurality of dimensions based on the battery state information obtained in real time, to realize refined determination of the power supply capability of the electronic device, and the allocable power of the electronic device is determined based on the power supply capability, to realize dynamic determination and refined regulation of the allocable power. Furthermore, based on the determined allocable power of the electronic device, the available power corresponding to the component of the first type is dynamically determined, which ensures a stable operation of the basic component and clear resource allocation. According to the available power corresponding to the component of the first type, the power allocation is performed for the component of the first type to meet power consumption control requirement of the target scenario and achieve an optimal ratio of the power allocation. When a device in the related art and a device in the present invention are in the same battery state, the device in the present invention has a better performance and a longer battery life compared to the device in the related art in the same target scenario. By intelligently and dynamically adjusting the power consumption, refined management of the power consumption is realized, and thus overall machine performance is improved.

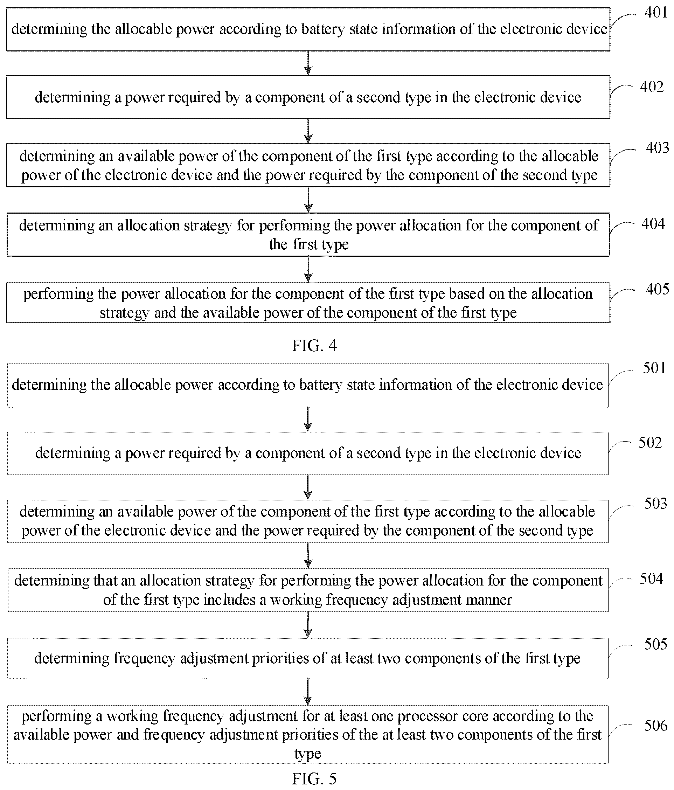

Based on the above embodiments, FIG. 4 is a flowchart of a method for controlling power consumption according to an embodiment of the present invention. As shown in FIG. 4, the method includes the following steps.

At step 401, the allocable power is determined according to the battery state information of the electronic device.

At step 402, the power required by the component of the second type in the electronic device is determined.

At step 403, the available power of the component of the first type is determined according to the allocable power of the electronic device and the power required by the component of the second type.

For details of steps 401 to 403, reference may be made to relevant explanations in the above embodiments and principles are the same, which will not be repeated here.

At step 404, an allocation strategy for performing the power allocation for the component of the first type is determined.

The allocation strategy includes at least one of: a power-on/power-off processing manner; or a working frequency adjustment manner.

As an implementation, a selection control may be displayed in an interactive interface of the electronic device, and a selected allocation strategy is determined based on a target selection control clicked by the user. Prompt information may be displayed in the interactive interface based on the target scenario of the electronic device to assist the user in selecting the allocation strategy. As an example, if a current target scenario of the electronic device is a scenario with a high performance requirement, for example, the user is playing games or taking photos, etc., the prompt information includes reminding the user to select a working frequency adjustment manner; and if a current target scenario of the electronic device is a scenario with a low performance requirement, for example, a standby scenario or a low-power scenario, etc., the user is prompted to select the power-on/power-off processing manner.

As a second implementation, the allocation strategy is randomly selected from the power-on/power-off processing manner and the working frequency adjustment manner.

As a third implementation, the allocation strategy is automatically matched according to a remaining battery capacity or the allocable power of the electronic device. For example, in any scenario, or in a specific scenario (e.g., the allocable power is greater than a preset threshold, the remaining battery capacity is greater than a preset threshold, the remaining battery capacity is lower than a preset threshold, etc.), power consumption control is performed by using the working frequency adjustment manner and/or the power-on/power-off processing manner to achieve fineness of power consumption control.

In one scenario, the allocable power is less than or equal to the preset threshold, or the remaining battery capacity is less than or equal to the preset threshold. If it is detected that the electronic device is in a standby state, it indicates that some components of the first type are not used for a long time, then the power-on/power-off processing manner may be used for the power consumption control. If it is required to maintain system responsiveness and a task load changes frequently, then the working frequency adjustment manner is used for the power consumption control.

At step 405, the power allocation is performed for the component of the first type based on the allocation strategy and the available power of the component of the first type.

As an implementation, the allocation strategy includes the power-on/power-off processing manner, that is, based on the available power of components of the first type, power-on or power-off processing is performed on at least some components of the first type in the components of the first type to achieve the power allocation for the component of the first type and improve overall performance.

As an implementation, the allocation strategy includes the working frequency adjustment manner, that is, according to the available power of the components of the first type, a working frequency of at least one component of the first type in the components of the first type is adjusted, so that adjusted total power of the components of the first type is less than or equal to the available power, to meet a current power consumption allocation requirement, and improve overall performance under a certain available power. If the user actively reduces screen brightness, it is considered as a power-saving scenario. In this scenario, the working frequency of at least one component of the first type may be adjusted. A working frequency to which the at least one component of the first type is adjusted ensures that the total power of the components of the first type in the electronic device is less than or equal to the available power, which reduces the working frequency of the components of the first type as much as possible to meet a demand for power saving.

As an implementation, the allocation strategy includes both the power-on/power-off processing manner and the working frequency adjustment manner. Based on the available power of the components of the first type, a component that needs to be powered off and a component that needs to be powered on among the components of the first type are first determined. For the component that needs to be powered on, the power allocation is performed via the working frequency adjustment manner to improve accuracy of the power allocation, thus enhancing overall performance of the electronic device.

In the method for controlling power consumption of the embodiments of the present invention, the available power for the component of the first type is determined based on the allocable power of the electronic device that is determined in real time while meeting the basic requirement of the electronic device, the allocation strategy for performing the power allocation for the component of the first type is determined, and the power allocation is performed for the component of the first type based on the allocation strategy and the available power of the component of the first type, which improves accuracy of the power allocation and thus enhances overall performance of the electronic device.

The above embodiments describe performing the power allocation for the component of the first type based on the allocation strategy, in which the allocation strategy includes at least one of a power-on/power-off processing manner or a working frequency adjustment manner. The following explains different implementations separately.

Based on the above embodiments, the embodiments of the present invention are described in case of the allocation strategy including the working frequency adjustment manner. FIG. 5 is a flowchart of a method for controlling power consumption according to an embodiment of the present invention. As shown in FIG. 5, the method includes the following steps.

At step 501, the allocable power is determined according to the battery state information of the electronic device.

At step 502, the power required by the component of the second type in the electronic device is determined.

At step 503, the available power of the component of the first type is determined according to the allocable power of the electronic device and the power required by the component of the second type.

For details of steps 501 to 503, reference may be made to relevant explanations in the above embodiments and principles are the same, which will not be repeated here.

At step 504, it is determined that the allocation strategy for performing the power allocation for the component of the first type includes the working frequency adjustment manner.

In an implementation of the embodiments of the present invention, an activated state of a control used to indicate the allocation strategy is detected. If a target control for the working frequency adjustment manner is in an activated state, it is determined that the selected power allocation strategy is the working frequency adjustment manner.

In an implementation of the embodiments of the present invention, in response to detecting that the target scenario of the electronic device is a scenario with a high performance requirement, for example, the user is playing games or taking photos, etc., it is automatically determined that the power allocation strategy is the working frequency adjustment manner.

At step 505, frequency adjustment priorities of at least two components of the first type are determined.

In an implementation of the embodiments of the present invention, according to current working frequencies of the at least two components of the first type, current power corresponding to the at least two components of the first type is determined. The power is positively correlated with the working frequency, and different components of the first type have different powers corresponding to different working frequencies. As an implementation, according to a mapping relationship between working frequencies and powers, current power of each component of the first type is determined, and a sum result of the current powers of the at least two components of the first type is used as the current power corresponding to the at least two components of the first type.

Further, the frequency adjustment priorities of the at least two components of the first type are determined according to at least one of a power consumption benefit corresponding to frequency adjustments of the at least two components of the first type or the target scenario. The following explains different situations separately.

As an implementation, the power consumption benefit corresponding to the frequency adjustment of each component of the first type is obtained.

According to the power consumption benefit corresponding to frequency adjustments of the at least two components of the first type, the frequency adjustment priorities of the at least two components of the first type are determined. The power consumption benefit indicates a value of power consumption reduction corresponding to the same amount of frequency adjustment. The larger the value of the power consumption reduction corresponding to the same amount of frequency adjustment is, the greater the power consumption benefit is, and vice versa. As an example, if a frequency of the CPU is reduced by one level, for example, 1MHz, the power will be reduced by 1 watt accordingly. If a frequency of the GPU is reduced by the same level, the power will be reduced by 5 watts accordingly. Thus, it may be determined that a power consumption benefit obtained by reducing the frequency of the GPU is greater, so a frequency adjustment priority of the GPU is higher than a frequency adjustment priority of the CPU.

As an example, the at least two components of the first type include a GPU, an NPU, and a CPU. As an implementation, the frequency adjustment priorities determined based on the power consumption benefits decrease in an order of GPU, NPU, and CPU, and the frequency adjustment priorities remain unchanged in both a frequency-increasing scenario and a frequency-decreasing scenario. As an implementation, the power consumption benefits corresponding to the frequency adjustments for different components are different in the frequency-increasing scenario and the frequency-decreasing scenario. For example, if a power consumption benefit of any component of the first type is high in the frequency-decreasing scenario, a power consumption benefit of any component of the first type is low in the frequency-increasing scenario. Therefore, in the frequency-decreasing scenario, the frequency adjustment priorities decrease in an order of GPU, NPU, and CPU; and in a frequency-increasing scenario, the frequency adjustment priorities decrease in an order of CPU, NPU, and GPU.

As an implementation, the frequency adjustment priorities of the at least two components of the first type are determined according to the target scenario. The target scenario includes a specific application scenario when using the electronic device. For example, if the user uses the electronic device to take photos, the target scenario is a photography scenario; and if the user uses the electronic device to play games, the target scenario is a gaming scenario. Therefore, different components of the first type undertake a main task in different target scenarios, so the frequency adjustment priorities of the at least two components of the first type are different in different target scenarios to meet requirements of the target scenarios.

As an example, in order to improve accuracy, in a frequency-increasing scenario, in a scenario requiring graphic rendering, the frequency adjustment priority of the GPU is greater than the frequency adjustment priority of the CPU, and the frequency adjustment priority of the CPU is greater than the frequency adjustment priority of the NPU. In a scenario requiring speech recognition and natural language processing, the frequency adjustment priority of the NPU is greater than the frequency adjustment priority of the CPU, and the frequency adjustment priority of the CPU is greater than the frequency adjustment priority of the GPU. In a frequency-decreasing scenario, the frequency adjustment priority is reversed, which will not be repeated here.

As a third implementation, according to the power consumption benefit corresponding to the frequency adjustment of each component of the first type and the target scenario, the frequency adjustment priorities of the at least two components of the first type are determined. As an implementation, a first frequency adjustment priority may be determined based on the power consumption benefit corresponding to the frequency adjustment of each component of the first type, and then a weight of each component of the first type is determined according to an identified target scenario to adjust the first frequency adjustment priority, so as to obtain the frequency adjustment priority of each component of the first type that matches the target scenario. By adding dimensions, accuracy of determining the frequency adjustment priorities of the at least two components of the first type is improved.

As an example, the frequency adjustment priorities determined based on the power consumption benefits decrease in the order of GPU, NPU, and CPU. Taking the target scenario being an AI model-driven gaming scenario as an example, the component of the first type that undertakes the main task is the NPU, and a frequency of the NPU needs to be guaranteed preferentially. Therefore, in a frequency-decreasing scenario, the frequency adjustment priorities are adjusted to decrease in an order of GPU, CPU, and NPU, to preferentially ensure that the frequency of the NPU is reduced as little as possible (i.e., ensure, to the maximum extent, that the frequency of the NPU is not reduced). In a frequency-increasing scenario, the frequency adjustment priorities are adjusted to decrease in an order of NPU, GPU, and CPU, to ensure that the frequency of the NPU is increased first.

At step 506, a working frequency adjustment is performed for at least one component of the first type according to the available power and frequency adjustment priorities of the at least two components of the first type.

In an implementation of the embodiments of the present invention, according to the frequency adjustment priorities of the at least two components of the first type, the working frequency of the at least one component of the first type is determined based on a frequency adjustment direction. In response to the determined working frequency of the at least one component of the first type causing the total power of the components of the first type in the electronic device to be less than or equal to the available power, the currently determined working frequency of the at least one component is a working frequency limited by the available power, and the at least one component is adjusted to the corresponding determined working frequency. The working frequency of the component of the first type has a mapping relationship with the corresponding power of the component of the first type. Based on the frequency adjustment priorities of the at least two components of the first type, frequencies for the at least two components of the first type are determined in sequence according to the available power to determine a working frequency to which the at least one component of the first type needs to be adjusted, so that the corresponding total power when at least some components of the first type operate at the working frequencies to which they need to be adjusted is less than or equal to the available power. Based on the frequency adjustment priorities, the working frequency adjustment is performed for the at least one component of the first type, which allows the component of the first type having a high priority to obtain more computing resources, achieves reasonable allocation of power resources, realizes refined control of the power consumption, thus improving overall machine performance.

Furthermore, according to a magnitude relationship between the current power and the available power, the frequency adjustment direction is determined. The frequency adjustment direction indicates whether to increase or decrease the frequency. If the total current power is greater than the available power, it is determined that the frequency adjustment direction indicates to decrease the frequency; and if the current power is less than the available power, it is determined that the frequency adjustment direction indicates to increase the frequency.

In the method for controlling power consumption of the embodiments of the present invention, according to the available power and the frequency adjustment priorities of the at least two components of the first type, the working frequency adjustment is performed for the at least one component of the first type, which achieves adjustment of the working frequency of the at least one component of the first type so as to meet a requirement of the current available power and achieve accurate control of the power consumption.

Based on the above embodiments, as an implementation, when the components of the first type include at least two components of the first type, a frequency adjustment priority of each component of the first type in the at least two components of the first type may be determined, and based on the frequency adjustment priorities of the at least two components of the first type, the working frequency adjustment is performed to improve accuracy of power adjustment.

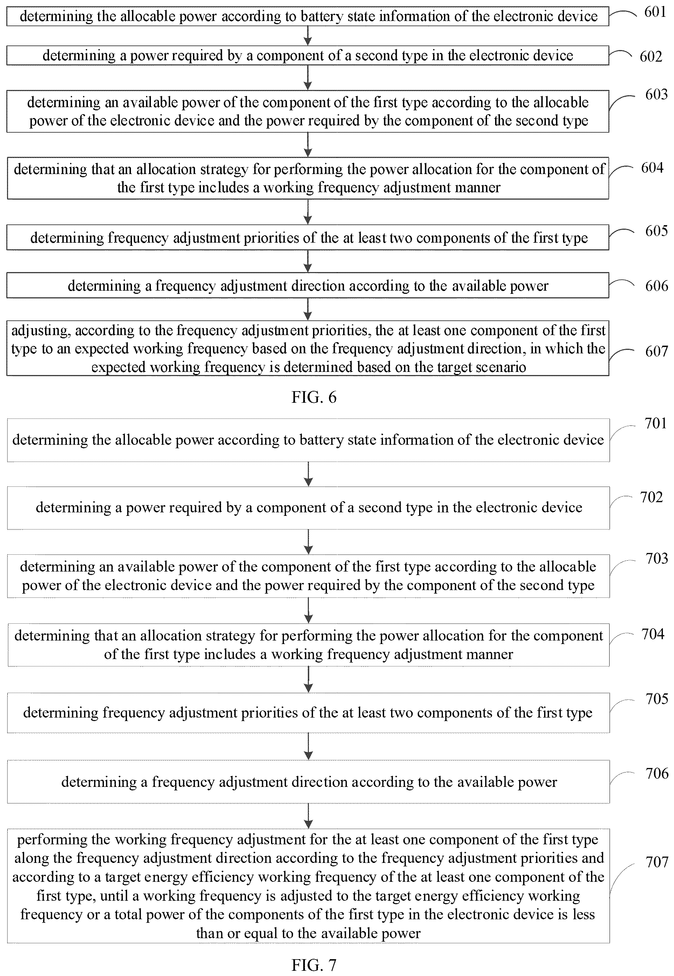

FIG. 6 is a flowchart of a method for controlling power consumption according to an embodiment of the present invention. As shown in FIG. 6, the method includes the following steps.

At step 601, the allocable power is determined according to the battery state information of the electronic device.

At step 602, the power required by the component of the second type in the electronic device is determined.

At step 603, the available power of the component of the first type is determined according to the allocable power of the electronic device and the power required by the component of the second type.

At step 604, it is determined that the allocation strategy for performing the power allocation for the component of the first type includes the working frequency adjustment manner.

At step 605, frequency adjustment priorities of the at least two components of the first type are determined.

For details of steps 601 to 605, reference may be made to relevant explanations in the above embodiments and principles are the same, which will not be repeated here.

At step 606, a frequency adjustment direction is determined according to the available power.

As an implementation, according to a magnitude relationship between the current power corresponding to the component of the first type and the available power, the frequency adjustment direction is determined. If the current power is greater than the available power, it is determined that the frequency adjustment direction indicates to decrease the frequency; if the current power is less than the available power and a performance requirement of a certain processor core increases in the target scenario, it is determined that the frequency adjustment direction indicates to increase the frequency; and if the current power is equal to the available power, it is determined that the frequency adjustment direction indicates not to adjust the frequency. For a case of not adjusting, it is not discussed in the embodiments of the present invention.

At step 607, according to the frequency adjustment priority of the at least one component of the first type, the at least one component of the first type is adjusted to an expected working frequency based on the frequency adjustment direction, in which the expected working frequency is determined based on the target scenario.

The expected working frequency is a working frequency of each component of the first type determined based on the target scenario, that is, in the target scenario, a working frequency to which a system of the electronic device hopes each component of the first type to be adjusted is determined. Due to limitations of the available power and the frequency adjustment direction, it is impossible that all components of the first type may be adjusted to their corresponding expected working frequencies. In an actual adjustment process, at least one component of the first type will be adjusted according to the frequency adjustment direction based on the frequency adjustment priority, so that the at least one component of the first type is adjusted to the expected working frequency, which achieves adjustment of the frequency to meet a power requirement for each component of the first type in the target scenario.

As an example, as shown in Table 1:

**Table 1**

| | | GPU | NPU | CPUB | CPUM |
|---|---|---|---|---|---|
| current power | 40 | 10 | 10 | 10 | 10 |
| expected working frequency | 35 | 5 | 5 | 10 | 15 |
| working frequency for the first adjustment | 30 | 5 | 5 | 10 | 10 |
| working frequency for the second adjustment | 35 | 5 | 5 | 10 | 15 |

As an example, as shown in Table 1, when the total current power corresponding to four components of the first type is 40 watts, power of each component of the first type is 10 watts. The working frequency has a corresponding relationship with the power, for example, the 1:1 corresponding relationship as shown in Table 1. Thus, the current working frequencies of the GPU, NPU, CPUB, and CPUM are all 10 MHz. Expected working frequencies corresponding to the GPU, NPU, CPUB, and CPUM are 5 MHz, 5 MHz, 10 MHz, and 15 MHz, respectively. The current available power is 35 watts. In the current target scenario, based on a power consumption benefit of each component of the first type and the current scenario, the adjustment priorities are determined to decrease in an order of GPU, NPU, CPUB, and CPUM. Since the current power is 40 watts and the current available power is 35 watts, which is less than the current power (40 watts), the frequency is required to be decreased. During a frequency-decreasing process, a first round of adjustment is firstly executed. For any one component of the first type, if the current working frequency of the any one component of the first type is greater than or equal to a corresponding expected working frequency, the expected working frequency of the any one component of the first type is taken as a target working frequency to which the current working frequency needs to be adjusted. For example, an expected working frequency of the GPU is 5 MHz, and a current working frequency of the GPU is 10 MHz, so a target working frequency to which the GPU needs to be adjusted is 5 MHz. If a current working frequency of any one component of the first type is less than a corresponding expected working frequency, the working frequency of the any one component of the first type remains unchanged, which means that no adjustment is performed. For example, an expected working frequency of the CPUM is 15 MHz and a current working frequency of the CPUM is 10 MHz, so the CPUM may not be adjusted currently, and its working frequency remains unchanged. After the first round of adjustment is executed, if the total power corresponding to all components of the first type in the electronic device is less than the available power, it indicates that there is still power headroom unused, and then a second round of adjustment may be executed. The second round of adjustment is a frequency-increasing process. Since power headroom is 5 watts, the CPUM may be increased from 10 MHz to 15 MHz correspondingly, so that the total power of a plurality of components of the first type after the adjustment is less than or equal to the available power, and the frequency adjustment process is stopped.

For a scenario where the frequency adjustment direction indicates to increase the frequency, the adjustment follows the same principle, which will not be repeated here.

It needs to be understood that after determination of the working frequency is completed for at least two components of the first type according to the frequency adjustment direction with the expected working frequency as a target, if the total power of all components of the first type in the electronic device is less than or equal to the available power, a working frequency adjustment process ends; if the total power of all components of the first type in the electronic device is greater than the available power, in case where the at least one component of the first type is adjusted to the expected working frequency, taking the working frequency of each component of the first type as a starting point, the frequency adjustment continues until the total power of all components of the first type in the electronic device is less than or equal to the available power, which will be explained in detail in the following implementations and will not be repeated here.

In the method for controlling power consumption in the embodiments of the present invention, by adjusting the at least one component of the first type to the expected working frequency according to the frequency adjustment direction based on the frequency adjustment priority, the adjustment process considers the expected working frequency to which an upper-layer system hopes each component of the first type to be adjusted, which meets a power requirement for each component of the first type in the target scenario and improves accuracy of power consumption control.

In a practical scenario, each component of the first type has a target energy efficiency working frequency. The performance of the component of the first type exceeds a preset threshold when the component of the first type operates at the target energy efficiency working frequency. The performance of the component of the first type may be indicated by at least one of: a power value, a task execution rate, an energy efficiency ratio, or a computing capability obtained when operating at the target energy efficiency working frequency. The target energy efficiency working frequency may be set in advance or calculated based on the performances of the component of the first type in different application scenarios. In an actual adjustment process, the target energy efficiency working frequency corresponding to at least one component of the first type may be considered in a working frequency adjustment process to meet an energy efficiency requirement of the component of the first type, which achieves a balance between energy efficiency and power consumption control, and improves effectiveness of power consumption control.

Based on the above embodiments, FIG. 7 is a flowchart of a method for controlling power consumption according to an embodiment of the present invention. As shown in FIG. 7, the method includes the following steps.

At step 701, the allocable power is determined according to the battery state information of the electronic device.

At step 702, the power required by the component of the second type in the electronic device is determined.

At step 703, the available power of the component of the first type is determined according to the allocable power of the electronic device and the power required by the component of the second type.

At step 704, it is determined that the allocation strategy for performing the power allocation for the component of the first type includes the working frequency adjustment manner.

At step 705, frequency adjustment priorities of at least two components of the first type are determined.

At step 706, a frequency adjustment direction is determined according to the available power.

For details of steps 701 to 706, reference may be made to relevant explanations in the above embodiments and principles are the same, which will not be repeated here.

At step 707, the working frequency adjustment is performed for at least one component of the first type along the frequency adjustment direction according to the frequency adjustment priorities and according to target energy efficiency working frequency of the at least one component of the first type, until a working frequency of the at least one component of the first type is adjusted to the target energy efficiency working frequency or a total power of the components of the first type in the electronic device is less than or equal to the available power.

The working frequency adjustment for the at least one component of the first type along the frequency adjustment direction starts from a preset working frequency and includes the following scenarios.

In a scenario, the preset working frequency is a current working frequency of any one component of the first type, that is, a working frequency of each component of the first type corresponding to the current power, which is a working frequency before the working frequency adjustment is performed.

In a scenario, a preset working frequency of any one component of the first type is a working frequency determined after the any one component of the first type performs a process for determining a working frequency in the embodiment of FIG. 6. That is, a process for determining a frequency in the embodiments of the present invention may be executed after the process for determining a frequency in the embodiment of FIG. 6 is completed for all components of the first type and if the total power of the at least two components of the first type is greater than the available power.

In an implementation of the embodiments of the present invention, the process for determining a frequency for any one component of the first type includes: according to the frequency adjustment priorities, determining the working frequency of the at least one component of the first type along the frequency adjustment direction from the preset working frequency towards the target energy efficiency working frequency. In a first scenario, in a process of adjusting the working frequency towards the target energy efficiency working frequency, if the total power of the components of the first type in the electronic device is less than or equal to the available power, the process for determining a frequency for any one component of the first type is stopped, and the process for determining a frequency is also stopped for the components of the first type with other frequency adjustment priorities. The working frequency determined for each component of the first type under a condition that the total power of the components of the first type in the electronic device is less than or equal to the available power is used as the target working frequency, and the working frequency is adjusted to the corresponding target working frequency. In a second scenario, if the at least one component of the first type is determined to reach the target energy efficiency working frequency, the process for determining a frequency for the at least one component of the first type is stopped, and the process for determining a frequency for a component of the first type with the next frequency adjustment priority begins. Execution principles are the same and will not be repeated here. After the process for adjusting working frequencies of all components of the first type is completed, if the total power corresponding to all components of the first type in the electronic device at their respective target energy efficiency working frequencies is greater than the available power, the target energy efficiency working frequency of each component of the first type is taken as the current working frequency, that is, as a starting frequency for determining the working frequency, and the frequency adjustment continues towards the extreme value working frequency. This will be explained in detail in the following embodiments.

Actual application scenarios include a frequency-increasing scenario and a frequency-decreasing scenario. The frequency-decreasing scenario is used as an example for explanation.

As an implementation, a plurality of components of the first type include a GPU, an NPU, a CPUB, and a CPUM. For example, in an AI-driven gaming scenario, based on the power consumption benefit of each component of the first type and the current scenario, the adjustment priorities are determined to decrease in an order of GPU, NPU, CPUB, and CPUM. Thus, a corresponding process for determining a working frequency is firstly executed for the GPU. As an implementation, it is determined level by level whether a working frequency of the GPU at each level meets the power consumption requirement. In a process for determining level by level, a working frequency at the first level determined is the current working frequency, and a working frequency at the last level or final level is the target energy efficiency working frequency. If the total power of all components of the first type calculated under the working frequency of the GPU at each level does not meet a power limitation requirement, the corresponding process for determining a working frequency is executed for the NPU with a next frequency adjustment priority. The execution principle is the same as the execution principle of the GPU. If the total power of all components of the first type calculated under the working frequency of the NPU at each level does not meet the power consumption limitation requirement, a corresponding process for determining a work frequency is executed sequentially for the CPUB and the CPUM with a next frequency adjustment priority. Until the calculated total power of all components of the first type is less than or equal to the available power, the corresponding process for determining a working frequency is stopped, and a power determination process is stopped for the components of the first type with subsequent frequency adjustment priorities.

To facilitate understanding, Table 2 shows a specific method of decreasing the frequency according to the frequency adjustment priority in a frequency-decreasing scenario, which will be described with reference to Table 2 by taking the current working frequency being a working frequency of any one component of the first type before a working frequency adjustment is performed for the any one component of the first type.

**Table 2**

| | | working frequency | GPU working frequency | NPU working frequency | CPUB working frequency | CPUM working frequency |
|---|---|---|---|---|---|---|
| current power | 40 | 40 | 10 | 10 | 10 | 10 |
| available power | 37 | 39 | 9 | 10 | 10 | 10 |
| | | 38 | 8 | 10 | 10 | 10 |
| | | 37 | 7 | 10 | 10 | 10 |

**Table 3**

| | | working frequency | | NPU working frequency | | GPU working frequency | | CPUB working frequency | | CPUM working frequency | |
|---|---|---|---|---|---|---|---|---|---|---|---|
| current power | 40 | | 40 | | 10 | | 10 | | 10 | | 10 |
| available power | 17 | | 35 | | 5 | | 10 | | 10 | | 10 |
| | | | 32 | | 5 | | 7 | | 10 | | 10 |
| | | | 25 | | 5 | | 7 | | 3 | | 10 |
| | | | 17 | | 5 | | 7 | | 3 | | 2 |

It needs to be noted that in Table 2 and Table 3, the unit of the power may be watt, and the unit of the frequency may be MHz. Numerical values and units of the power and the frequency in the embodiments of the present invention are used for illustration only and do not constitute a limitation to the embodiments of the present invention.

When the total current power corresponding to four components of the first type is 40 watts, the power of each component of the first type is 10 watts. The working frequency has a corresponding relationship with the power, for example, 1:1 corresponding relationship as shown in Table 1. Thus, the current working frequencies of the GPU, NPU, CPUB, and CPUM are all 10 MHz. Target energy efficiency working frequencies corresponding to the GPU, NPU, CPUB, and CPUM are 7 MHz, 5 MHz, 3 MHz, and 2 MHz, respectively.

Referring to Table 2, in the first scenario, that is, an AI-driven gaming scenario, based on the power consumption benefit of each component of the first type and the current scenario, the adjustment priorities are determined to decrease in an order of GPU, NPU, CPUB, and CPUM. As an implementation, the available power is 37 watts. First, the process for determining a working frequency is executed for the GPU, that is, it is firstly determined that the working frequency of the GPU is 9 MHz, and the corresponding total power is 39 watts, which is greater than the available power 37 watts. Since 9 MHz is greater than the target energy efficiency working frequency 7 MHz, the process may continue downwards. Next, the working frequency of the GPU is determined to be 8 MHz, and the corresponding total power is 38 watts, which is still greater than the available power 37 watts. Since 8 MHz is greater than the target energy efficiency working frequency 7 MHz, the process may continue downwards. Next, the working frequency of the GPU is determined to be 7 MHz, and the corresponding total power is 37 watts, which is equal to the available power 37 watts. Then the power determination process is stopped for the GPU. In case where the frequency of the GPU is determined to be 7 MHz, a limitation requirement of the available power may be satisfied, and other components of the first type do not need to subject to the process for determining a frequency, which means that working frequencies of other components of the first type remain unchanged. Thus, it is determined that the current target working frequency of the GPU is 7 MHz, and the target working frequencies of other components of the first type remain unchanged, the components of the first type are adjusted to the corresponding target working frequencies.

Referring to Table 3, in the second scenario, that is, a photography scenario, based on the power consumption benefit of each component of the first type and the current scenario, the adjustment priorities are determined to decrease in an order of NPU, GPU, CPUB, and CPUM. As an implementation, the available power is 17 watts. Following the same method as that described in the first scenario above, the process for determining a working frequency is firstly executed for the NPU. For the process for determining, reference may be made to the above explanation, which will not be repeated here. Until the working frequency of the NPU is determined to be the target energy efficiency working frequency of 5 MHz, the total power of the four components of the first type is 35 watts, which is still greater than the available power 17 watts. Since the target energy efficiency working frequency of the NPU is 5 MHz, to ensure the energy efficiency of the NPU, a process of determining a power to be a smaller power value is stopped for the NPU, and the process for determining a working frequency is performed for the GPU with a next frequency adjustment priority. The process for determining is the same as the process for determining for the NPU. When the working frequency of the GPU is determined to be the target energy efficiency working frequency of 7 MHz, the total power of the four components of the first type is 32 watts, which is still greater than the available power 17 watts. Since the target energy efficiency working frequency of the GPU is 7 MHz, to ensure the energy efficiency of the NPU, a process of determining a power to be a smaller power value is stopped for the GPU, and the process for determining a working frequency is performed for a CPUB with a next frequency adjustment priority. Principles are the same and will not be repeated here. When determined working frequencies of all four components of the first type are their target energy efficiency working frequencies, the total power of the four components of the first type is 17 watts, which is equal to the available power 17 watts, and the process for determining a frequency is stopped.

It needs to be understood that if the total power of the four components of the first type is greater than the available power when the determined working frequencies of the four components of the first type are all their target energy efficiency working frequencies, the process for determining a power continues for each component of the first type by taking the target energy efficiency working frequency of each component of the first type as a starting point. For the execution process, reference may be made to relevant explanations in the following embodiments, which will not be repeated here.

A method for adjusting a working frequency in a frequency-increasing scenario is the same as the method for adjusting a working frequency in the frequency-decreasing scenario described above and principles are the same, which will not be repeated here.

In the embodiments of the present invention, each component of the first type has a corresponding target energy efficiency working frequency, which may be a preset value or may change with the scenario. That is, in different scenarios, the target energy efficiency working frequency of each component of the first type may be different to meet energy efficiency requirements of different scenarios. Therefore, to improve accuracy, a target energy efficiency working frequency of at least one component of the first type that matches the target scenario may be determined based on the current target scenario corresponding to the electronic device, which achieves dynamic determination of the target energy efficiency working frequency of each component of the first type based on the target scenario, so that in a process for controlling power consumption, performance requirements of actual scenarios are considered, and a balance between performance and power consumption is achieved in the target scenario.

In the method for controlling power consumption in the embodiments of the present invention, the power supply capability of the battery may be determined from a plurality of dimensions based on the battery state information obtained in real time, which realizes refined determination of the power supply capability of the electronic device. Further, the allocable power of the electronic device is determined based on the power supply capability, which achieves dynamic determination and refined regulation of the allocable power. Furthermore, based on the determined allocable power of the electronic device, the available power corresponding to the component of the first type is dynamically determined, which ensures a stable operation of the basic component and clear resource allocation. According to the available power corresponding to the component of the first type, the power allocation is performed for the component of the first type to meet the power consumption control requirement of the target scenario and achieve an optimal ratio of the power allocation. When a device in the related art and a device in the present invention are in the same battery state, the device in the present invention has a better performance and a longer battery life compared to the device in the related art in the same target scenario. By dynamically determining the target energy efficiency working frequency of each component of the first type based on the target scenario, performance requirements of the actual scenarios are considered in the process for controlling power consumption, which achieves a balance between overall machine performance and power consumption in the target scenario.

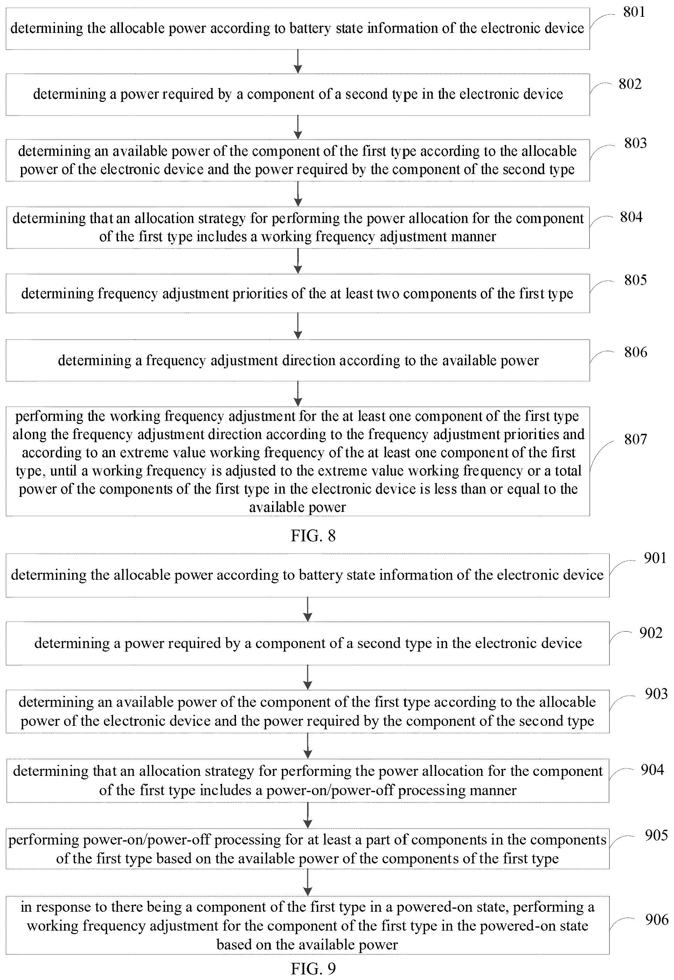

Based on the above embodiments, FIG. 8 is a flowchart of a method for controlling power consumption according to an embodiment of the present invention. As shown in FIG. 8, the method includes the following steps.

At step 801, the allocable power is determined according to the battery state information of the electronic device.

At step 802, the power required by the component of the second type in the electronic device is determined.

At step 803, the available power of the component of the first type is determined according to the allocable power of the electronic device and the power required by the component of the second type.

At step 804, it is determined that the allocation strategy for performing the power allocation for the component of the first type includes the working frequency adjustment manner.

At step 805, frequency adjustment priorities of at least two components of the first type are determined.

At step 806, the frequency adjustment direction is determined according to the available power.

For details of steps 801 to S806, reference may be made to relevant explanations in the above embodiments and principles are the same, which will not be repeated here.

At step 807, a working frequency adjustment is performed for at least one component of the first type along the frequency adjustment direction according to the frequency adjustment priorities and according to an extreme value working frequency of the at least one component of the first type, until a working frequency of the at least one component of the first type is adjusted to the extreme value working frequency or a total power of the components of the first type in the electronic device is less than or equal to the available power.

The extreme value working frequency is a maximum value or a minimum value in a frequency adjustment range corresponding to the component of the first type. In a frequency-increasing scenario, the extreme value working frequency includes the highest working frequency, that is, the maximum value. In a frequency-decreasing scenario, the extreme value working frequency includes the lowest working frequency, that is, the minimum value.

In the embodiments of the present invention, the working frequency adjustment for the at least one component of the first type along the frequency adjustment direction is performed by adjusting the working frequency from a preset working frequency towards the extreme value working frequency, until the preset working frequency is adjusted to the extreme value working frequency or the total power of the components of the first type in the electronic device is less than or equal to the available power.

The working frequency adjustment for the at least one component of the first type along the frequency adjustment direction starts from a preset working frequency and includes the following scenarios.

In a scenario, the preset working frequency is a current working frequency of any one component of the first type, that is, a working frequency of each component of the first type corresponding to the current power, which is a working frequency before the working frequency adjustment is performed.

In a scenario, a preset working frequency of any one component of the first type is a working frequency determined after a process for determining a working frequency in the embodiment of FIG. 6 is executed for the any one component of the first type. That is, a process for determining a frequency in the embodiments of the present invention may be executed after the process for determining a frequency in the embodiment of FIG. 6 is completed for all components of the first type and if the total power of the at least two components of the first type is greater than the available power.

In a scenario, a preset working frequency of any one component of the first type is a working frequency determined after a process for determining a working frequency in the embodiment of FIG. 7 is executed for the any one component of the first type. That is, a process for determining a frequency in the embodiments of the present invention may be executed after the process for determining a frequency in the embodiment of FIG. 7 is completed for all components of the first type and if the total power of the at least two components of the first type is greater than the available power.

To facilitate understanding, Table 4 shows a method of decreasing a frequency of at least one component of the first type towards the extreme value working frequency according to the frequency adjustment priority in a frequency-decreasing scenario, which will be described with reference to Table 4 by taking the preset working frequency being a current working frequency of any one component of the first type before a working frequency adjustment is performed for the any one component of the first type.

**Table 4**

| | | working frequency | GPU working frequency | NPU working frequency | CPUB working frequency | CPUM working frequency |
|---|---|---|---|---|---|---|
| current power | 40 | 40 | 10 | 10 | 10 | 10 |
| available power | 37 | 37 | 7 | 10 | 10 | 10 |
| | 28 | 28 | 2 | 6 | 10 | 10 |
| | 23 | 23 | 2 | 1 | 10 | 10 |
| | 16 | 16 | 2 | 1 | 3 | 10 |

It needs to be noted that numerical values and units of the power and the frequency in the embodiments of the present invention are used for illustration only and do not constitute a limitation to the embodiments of the present invention.

As shown in Table 4, when the total current power corresponding to the four components of the first type is 40 watts (W), the power of each component of the first type is 10 watts. The working frequency has a corresponding relationship with the power, for example, 1:1 corresponding relationship as shown in Table 1. Thus, the current working frequencies of the GPU, NPU, CPUB, and CPUM are all 10 MHz. A minimum working frequency of the GPU is 2 MHz, a minimum working frequency of the NPU is 1 MHz, a minimum working frequency of the CPUB is 3 MHz, and a minimum working frequency of the CPUM is 2 MHz.

In the first scenario, that is, an AI-driven gaming scenario, based on the power consumption benefit of each component of the first type and the current scenario, the adjustment priorities are determined to decrease in an order of GPU, NPU, CPUB, and CPUM. Referring to FIG.1, as an implementation, when the available power is 37 watts, the process for determining a working frequency is firstly executed for the GPU. For the level-wise decreasing process, reference may be made to the relevant explanations in the above embodiments and principles are the same, which will not be repeated here. When the frequency of the GPU is determined to be 7 MHz, a limitation requirement of the available power may be satisfied, and the total power of the four components of the first type is 37 watts, which is equal to the available power 37 watts. The working frequencies of other components of the first type remain unchanged, that is, remain at their original working frequencies.

In the second scenario, when the available power is 28 watts, the process for determining a working frequency is firstly executed for the GPU. When the working frequency of the GPU is determined to be the minimum working frequency of 2 MHz, the first total power corresponding to the four components of the first type is 32 watts, which exceeds the limitation requirement of the available power of 28 watts. The process for determining a working frequency is then stopped for the GPU, and the process for determining a working frequency is started for the NPU. When the working frequency of the NPU is determined to be 6 MHz, the first total power of the four components of the first type is 28 watts, which is equal to the available power of 28 watts, it indicates that the limitation requirement is met. The process for determining a working frequency is stopped for the CPUB and the CPUM, that is, target working frequencies of the CPUB and the CPUM remain at their original working frequencies. Thus, a currently determined target working frequency of the GPU is 2 MHz, the target working frequency of the NPU is 6 MHz, and the target working frequencies of the CPUB and the CPUM are both 10 MHz. For the process for determining a working frequency of each component of the first type, reference may be made to the relevant explanations in the above embodiments and principles are the same, which will not be repeated here.

In the third scenario, when the available power is 23 watts, a principle is the same as the principle above. When the target working frequency of the GPU is determined to be the minimum working frequency of 2 MHz, the target working frequency of the NPU is determined to be the minimum working frequency of 1 MHz, and the target working frequencies of the CPUB and the CPUM are all 10 MHz, the total power of the four components of the first type is 23 watts which is equal to the available power of 23 watts. Thus, the target working frequencies of the four components of the first type are determined.

In the fourth scenario, when the available power is 16 watts, a principle is the same as the principle above. A finally determined target working frequency corresponding to the GPU is 2 MHz, the target working frequency corresponding to the NPU is 1 MHz, the target working frequency corresponding to the CPUB is 3 MHz, and the target working frequency corresponding to the CPUM is 10 MHz. For details, reference may be made to examples in Table 1. Principles are the same and will not be repeated in this embodiment.

It needs to be noted that the above four implementations are all described based on the frequency adjustment priority corresponding to the same target scenario. If the frequency adjustment priority changes, an order of determining the working frequency will also change. For details, reference may be made to the relevant explanations in the above embodiments and principles are the same, which will not be repeated here.

In the embodiments of the present invention, in the frequency-decreasing scenario, a minimum working frequency of each component of the first type is set. The minimum working frequency may be determined based on an empirical value to ensure that basic performance is maintained when power consumption is limited. A minimum working frequency of each component of the first type ensures that the electronic device may still provide a basic computing capability and a graphics processing capability in a low-power mode, which reduces occurrence of user experience degradation due to excessive frequency limitation.

It needs to be noted that for the frequency-increasing scenario, that is, a power-increasing scenario, an extreme value of the working frequency corresponding to each component of the first type is the maximum working frequency. The principle is the same as the principle in the frequency-decreasing scenario, which will not be repeated here.

In the method for controlling power consumption in the embodiments of the present invention, the power supply capability of the battery may be determined from a plurality of dimensions based on the battery state information obtained in real time, which realizes refined determination of the power supply capability of the electronic device. Further, the allocable power of the electronic device is determined based on the power supply capability, which achieves dynamic determination and refined regulation of the allocable power. Furthermore, based on the determined allocable power of the electronic device, the available power corresponding to the component of the first type is dynamically determined, which ensures a stable operation of the basic component and clear resource allocation. According to the available power corresponding to the component of the first type and the frequency adjustment priority, the power allocation is performed for the component of the first type to meet the power consumption control requirement of the target scenario, achieve that the component of the first type with a higher frequency adjustment priority is adjusted firstly and the component of the first type with a lower frequency adjustment priority is adjusted later, and realize an optimal ratio of the power allocation. When a device in the related art and a device in the present invention are in the same battery state, the device in the present invention has a better performance and a longer battery life compared to the device in the related art in the same target scenario. By intelligently and dynamically adjusting the power consumption, refined management of the power consumption is realized, and thus overall machine performance is improved.

Based on the above embodiments, the embodiments of the present invention are described in case of the allocation strategy including the power-on/power-off processing manner. FIG. 9 is a flowchart of a method for controlling power consumption according to an embodiment of the present invention. As shown in FIG. 9, the method includes the following steps.

At step 901, the allocable power is determined according to the battery state information of the electronic device.

At step 902, the power required by the component of the second type in the electronic device is determined.

At step 903, the available power of the component of the first type is determined according to the allocable power of the electronic device and the power required by the component of the second type.

For details of steps 901 to 903, reference may be made to relevant explanations in the above embodiments and principles are the same, which will not be repeated here.

At step 904, it is determined that the allocation strategy for performing the power allocation for the component of the first type includes the power-on/power-off processing manner.

In an implementation of the embodiments of the present invention, an activated state of a control used to indicate the allocation strategy is detected. If a target control for the power-on/power-off processing manner is in the activated state, it is determined that the selected power allocation strategy is the power-on/power-off processing manner.

In another implementation of the embodiments of the present invention, in response to detecting that the target scenario of the electronic device is a scenario with a low performance requirement, for example, a standby scenario, it is automatically determined that the power allocation strategy is the power-on/power-off processing manner.

At step 905, power-on/power-off processing is performed for at least a part of components in the components of the first type based on the available power of the components of the first type.

As an implementation, the available power may be compared with a preset power threshold. If the available power is greater than the preset power threshold, it indicates that the current available power is relatively large, a battery capacity is sufficient, and all components of the first type may be in a powered-on state. Thus, power-on processing is performed for all components of the first type.

As another implementation, the available power is compared with a preset power threshold. If the available power is less than or equal to the preset power threshold, it indicates that current available power is relatively small and a battery capacity is low. Then, power-on processing may be performed for some components in the components of the first type and power-off processing may be performed for some components of the components of the first type to meet a power consumption control requirement in a low battery scenario and save electrical energy. As an implementation, the component of the first type subject to the power-off processing may be determined based on the usage number at a plurality of historical moments before a current moment. A component with the usage number less than a preset number threshold is selected as the component of the first type for the power-off processing. As another implementation, based on a current target scenario of the electronic device, the component of the first type that requires the power-on processing and the component of the first type that requires the power-off processing in the target scenario are determined to meet requirements of the target scenario and improve accuracy of the power-on/power-off processing.

As an example, the component of the first type includes a GPU and an NPU. When the available power is less than or equal to the preset power threshold and the target scenario is a photography scenario, the GPU is needed to perform image processing in the photography scenario, so the GPU needs to be powered on, and if it is not required to be driven by AI, the NPU may be powered off, which achieves a balance between energy efficiency and power consumption control via the power-on/power-off processing manner in the low battery scenario, and improves overall machine performance.

At step 906, in response to there being a component of the first type in a powered-on state, power allocation is performed for the component of the first type in the powered-on state based on the available power.

In an implementation of the embodiments of the present invention, in response to determining that there is the component of the first type in the powered-on state, random power allocation is performed for the component of the first type in the powered-on state according to the available power to meet an available power limitation requirement.

In another implementation of the embodiments of the present invention, to improve the accuracy of the power allocation, the working frequency adjustment manner used in the above embodiments may be adopted based on the available power to perform the power allocation. For a specific allocation method, reference may be made to the relevant explanations in the above embodiments and principles are the same, which will not be repeated here.

In the method for controlling power consumption of the embodiments of the present invention, by performing the power-on/power-off processing on the at least a part of the components of the first type, a method for adjusting power consumption is simple, and system resources are allocated and utilized more effectively, which improves an energy efficiency ratio and thus enhances overall machine performance.

Based on the above embodiments, in an implementation of the embodiments of the present invention, a frequency adjustment range of the component of the first type is determined based on a current working frequency and an extreme value working frequency. The extreme value working frequency includes a maximum working frequency and a minimum working frequency. The maximum working frequency and the minimum working frequency are preset. The maximum working frequency may remain unchanged in a scenario where the electronic device has any battery capacity.

In a practical application, to effectively control peak power consumption and improve a system stability, in an implementation of the embodiments of the present invention, when the battery capacity is below a preset threshold, that is, when the allocable power is less than the preset threshold, a maximum working frequency of each component of the first type may be limited. In response to the allocable power being less than the preset threshold, according to the target scenario and the allocable power, a preset corresponding relationship is queried to determine a maximum working frequency to which the at least one component of the first type currently needs to be adjusted. As an implementation, an adjusted maximum working frequency is taken as a maximum working frequency of a frequency-increasing scenario in a low battery capacity condition. When a power supply capability of the battery is less than the preset threshold, the maximum working frequency of the at least one component of the first type may be obtained via adjustment of an upper kernel layer to reduce the peak power consumption. Furthermore, adjusted maximum working frequencies of some of the components of the first type are sent to an underlying layer via the sysfs interface. Then, a processor at the underlying layer performs power consumption control according to the adjusted maximum working frequency of the at least one component of the first type. In this way, the peak power consumption control is effectively realized and accuracy of the power consumption control in the low battery scenario is improved.

For example, taking a component of the first type A as an example, before limiting a maximum frequency, a minimum working frequency is typically set to be 100 MHz and a maximum working frequency is typically set to be 1000 MHz. In a low battery capacity scenario, based on the current target scenario and the allocable power, a value of the maximum working frequency corresponding to the component of the first type A is adjusted. After adjustment, the maximum working frequency corresponding to the component of the first type A is 500 MHz, that is, the frequency adjustment range is adjusted to 100 MHz to 500 MHz. By appropriately reducing the maximum working frequency of the component of the first type, the peak power consumption control may be effectively achieved, and a system instability caused by an excessive power demand is prevented.

Based on the above embodiments, in the method for controlling power consumption in the embodiments of the present invention, independent of low battery capacity activation, the method for controlling power consumption may be implemented for the electronic device in any state. As an implementation, the method for controlling power consumption may be implemented when the power supply capability of the battery meets a preset condition. The preset condition may be that the power supply capability of the battery is lower than a preset threshold, or that the overall machine performance is lower than a preset condition, then the method for controlling power consumption of the present application is enabled.

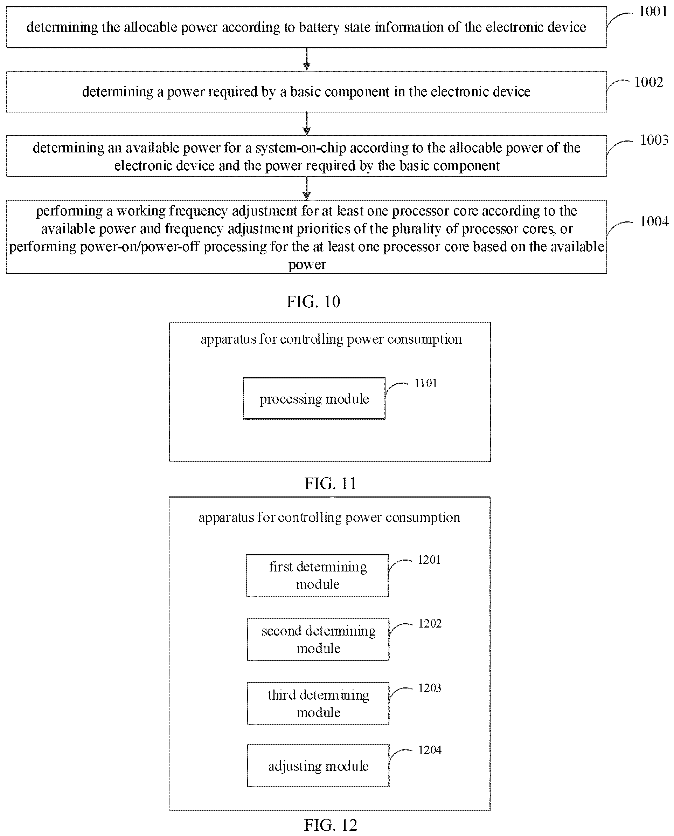

Based on the above embodiments, an embodiment of the present invention provide a method for controlling power consumption. FIG. 10 is a flowchart of a method for controlling power consumption according to an embodiment of the present invention. As shown in FIG. 10, the method includes the following steps.

At step 1001, the allocable power of the electronic device is determined according to the battery state information of the electronic device.

For details of step 1001, reference may be made to relevant explanations in the above embodiments and principles are the same, which will not be repeated here.

At step 1002, a power required by a basic component in the electronic device is determined.

For the method for determining the power required by the basic component, reference may be made to the method for determining the power required by the component of the second type in the above embodiments and principles are the same, which will not be repeated here.

At step 1003, an available power for a system-on-chip is determined according to the allocable power of the electronic device and the power required by the basic component.

The system-on-chip includes a plurality of processor cores. For example, the plurality of processor cores include the component of the first type, including a core corresponding to at least one processor of a GPU, an NPU, a CPU, a DPU, or an ISP. The CPU includes at least one of a CPU big core or a CPU medium core. As an implementation, the CPU big core and the CPU medium core are determined based on the processing capability, and a processing capability of the CPU big core is greater than a processing capability of the CPU medium core.

In the embodiments of the present invention, for the method of determining the available power for the system-on-chip, that is, available power corresponding to the plurality of processor cores, reference may be made to the relevant explanations in the above embodiments and principles are the same, which will not be repeated here.

At step 1004, a working frequency adjustment is performed for at least one processor core according to the available power and frequency adjustment priorities of the plurality of processor cores, or power-on/power-off processing is performed for the at least one processor core based on the available power.

For the frequency adjustment priorities of the plurality of processor cores, reference may be made to an explanation of the frequency adjustment priorities of the at least two components of the first type above and principles are the same, which will not be repeated here.

For the method for performing the working frequency adjustment for the at least a part of the processor cores, reference may be made to the relevant explanations of the method for performing the working frequency adjustment for the at least a part of the components of the first type above and principles are the same, which will not be repeated here.

In the method for controlling power consumption in the embodiments of the present invention, based on the current allocable power of the electronic device and the frequency adjustment priority, the power of a processor core with a high priority is firstly adjusted. Under a premise of meeting the power consumption requirement of the target scenario, flexible power consumption control based on the allocable power and an optimal ratio of the power allocation may be achieved. When a device in the related art and a device in the present invention are in the same battery state, the device in the present invention has a better performance and a longer battery life compared to the device in the related art in the same target scenario. Meanwhile, by intelligently and dynamically adjusting the power consumption, refined management of the power consumption is realized, and thus overall machine performance is improved.

Based on the above embodiments, in an implementation of the embodiments of the present invention, the method further includes:
obtaining a power consumption benefit corresponding to a frequency adjustment of each processor core; and
determining the frequency adjustment priorities of the plurality of processor cores according to a power consumption benefit corresponding to frequency adjustments of the plurality of processor cores.

In an implementation of the embodiments of the present invention, the method further includes:
determining the frequency adjustment priorities of the plurality of processor cores according to a target scenario.

In an implementation of the embodiments of the present invention, performing the working frequency adjustment for the at least one processor core according to the available power and the frequency adjustment priorities of the plurality of processor cores includes:
determining a frequency adjustment direction according to the available power; and
adjusting, according to the frequency adjustment priorities, at least one processor core to an expected working frequency along the frequency adjustment direction, in which the expected working frequency is determined based on the target scenario.

In an implementation of the embodiments of the present invention, performing the working frequency adjustment for the at least one processor core according to the available power and the frequency adjustment priorities of the plurality of processor cores includes:
determining a frequency adjustment direction according to the available power; and
performing the working frequency adjustment along the frequency adjustment direction according to the frequency adjustment priorities and according to a target energy efficiency working frequency of the at least one processor core, until a working frequency of the at least one processor core is adjusted to the target energy efficiency working frequency or a total power of the plurality of processor cores in the electronic device is less than or equal to the available power.

In an implementation of the embodiments of the present invention, performing the working frequency adjustment for the at least one processor core according to the available power and the frequency adjustment priorities of the plurality of processor cores includes:
determining a frequency adjustment direction according to the available power; and
performing the working frequency adjustment for the at least one processor core along the frequency adjustment direction according to the frequency adjustment priorities and according to an extreme value working frequency of the at least one processor core, until a working frequency of the at least one processor core is adjusted to the extreme value working frequency or a total power of the plurality of processor cores in the electronic device is less than or equal to the available power.

In an implementation of the embodiments of the present invention, the plurality of processor cores include a core corresponding to at least one processor of a GPU, an NPU, a CPU, a DPU, or an ISP. Any processor includes one or more cores.

Explanations about the component of the first type in the above embodiments also apply to the processor cores in the embodiments of the present invention, and implementation principles and beneficial effects are the same, which will not be repeated here.

In the method for controlling power consumption in the embodiments of the present invention, the working frequency adjustment is performed for the plurality of processor cores according to the frequency adjustment direction based on the frequency adjustment priorities of the plurality of processor cores. The working frequency of the at least one processor core is adjusted to a target working frequency. When the at least one processor core operates at the target working frequency, the second total power of the plurality of processor cores in the electronic device is less than or equal to the available power. In case where the second total power of the plurality of processor cores in the electronic device is less than or equal to the available power, the working frequency adjustment is performed for the plurality of processor cores according to a currently determined target working frequency of the at least one processor core. In this way, dynamic adjustment is realized based on the available power, the power consumption control requirements in different power supply scenarios are met, limitations brought by a single fixed power consumption control strategy are avoided, and a balance between optimized performance and power consumption is achieved.

To achieve the above embodiments, the embodiments of the present invention also provide an apparatus for controlling power consumption.

FIG. 11 is a block diagram of an apparatus for controlling power consumption according to an embodiment of the present invention.

As shown in FIG. 11, the apparatus may include:
a processing module 1101, configured to perform, based on an allocable power of an electronic device, power allocation for a component of a first type in the electronic device to meet a power consumption requirement of a target scenario, in which the component of the first type includes a system-on-chip.

Further, in an implementation of the embodiments of the present invention, the apparatus further includes a determining module, configured to:
determine the allocable power according to battery state information of the electronic device.

In an implementation of the embodiments of the present invention, the processing module 1101 is further configured to:
determine a power required by a component of a second type in the electronic device;
determine an available power of the component of the first type according to the allocable power of the electronic device and the power required by the component of the second type; and
perform the power allocation for the component of the first type based on the available power of the component of the first type.

In an implementation of the embodiments of the present invention, the component of the second type includes a basic component of the electronic device.

In an implementation of the embodiments of the present invention, the processing module 1101 is further configured to:
determine an allocation strategy for performing the power allocation for the component of the first type; and
perform the power allocation for the component of the first type based on the allocation strategy and the available power of the component of the first type.

In an implementation of the embodiments of the present invention, the allocation strategy includes at least one of:
a power-on/power-off processing manner; or
a working frequency adjustment manner.

In an implementation of the embodiments of the present invention, the processing module 1101 is further configured to:
in response to the allocation strategy including the power-on/power-off processing manner, perform power-on/power-off processing for at least a part of components in the components of the first type based on the available power of the components of the first type.

In an implementation of the embodiments of the present invention, the processing module 1101 is further configured to:
in response to there being a component of the first type in a powered-on state, perform a working frequency adjustment for the component of the first type in the powered-on state based on the available power.

In an implementation of the embodiments of the present invention, there are at least two components of the first type, and the processing module 1101 is further configured to:
in response to the allocation strategy including the working frequency adjustment manner, determine frequency adjustment priorities of the at least two components of the first type; and
perform a working frequency adjustment for at least one component of the first type according to the available power and the frequency adjustment priorities of the at least two components of the first type.

In an implementation of the embodiments of the present invention, the processing module 1101 is further configured to:
obtain a power consumption benefit corresponding to a frequency adjustment of each component of the first type; and
determine the frequency adjustment priorities of the at least two components of the first type according to a power consumption benefit corresponding to frequency adjustments of the at least two components of the first type.

In an implementation of the embodiments of the present invention, the processing module 1101 is further configured to:
determine the frequency adjustment priorities of the at least two components of the first type according to the target scenario.

In an implementation of the embodiments of the present invention, the processing module 1101 is further configured to:
determine a frequency adjustment direction according to the available power; and
adjust, according to the frequency adjustment priorities, the at least one component of the first type to an expected working frequency along the frequency adjustment direction, in which the expected working frequency is determined based on the target scenario.

In an implementation of the embodiments of the present invention, the processing module 1101 is further configured to:
determine a frequency adjustment direction according to the available power; and
perform the working frequency adjustment along the frequency adjustment direction according to the frequency adjustment priorities and according to a target energy efficiency working frequency of the at least one component of the first type, until a working frequency of the at least one component of the first type is adjusted to the target energy efficiency working frequency or a total power of the components of the first type in the electronic device is less than or equal to the available power.

In an implementation of the embodiments of the present invention, the processing module 1101 is further configured to:
determine a frequency adjustment direction according to the available power; and
perform the working frequency adjustment for the at least one component of the first type along the frequency adjustment direction according to the frequency adjustment priorities and according to an extreme value working frequency of the at least one component of the first type, until a working frequency of the at least one component of the first type is adjusted to the extreme value working frequency or a total power of the components of the first type in the electronic device is less than or equal to the available power.

In an implementation of the embodiments of the present invention, the determining module is further configured to:
determine the target energy efficiency working frequency based on the target scenario.

In an implementation of the embodiments of the present invention, the determining module is further configured to:
in response to the allocable power being less than a preset threshold, adjust a maximum working frequency of the at least one component of the first type according to the target scenario and the allocable power, in which an adjusted maximum working frequency is configured to determine a maximum working frequency in a frequency-increasing scenario.

In an implementation of the embodiments of the present invention, the component of the first type includes a core corresponding to at least one processor of a GPU, an NPU, a CPU, a DPU, or an ISP.

It needs to be noted that the above explanations of the method embodiments also apply to the apparatus of this embodiment, which will not be repeated here.

In the apparatus for controlling power consumption in the embodiments of the present invention, based on the current allocable power of the electronic device, the power of the component of the first type in the electronic device is dynamically adjusted, which achieves flexible power consumption control based on the allocable power. Under a premise of meeting the power consumption requirement of the target scenario, an optimal ratio of the power allocation is achieved. When a device in the related art and a device in the present invention are in the same battery state, the device in the present invention has a better performance and a longer battery life compared to the device in the related art in the same target scenario. Meanwhile, by intelligently and dynamically adjusting the power consumption, refined management of the power consumption is realized, and thus overall machine performance is improved.

Based on the above embodiments, FIG. 12 is a block diagram of an apparatus for controlling power consumption according to an embodiment of the present invention.

As shown in FIG. 12, the apparatus may include:
a first determining module 1201, configured to determine an allocable power of an electronic device according to battery state information of the electronic device;
a second determining module 1202, configured to determine a power required by a basic component in the electronic device;
a third determining module 1203, configured to determine an available power for a system-on-chip according to the allocable power of the electronic device and the power required by the basic component, in which the system-on-chip includes a plurality of processor cores; and
an adjusting module 1204, configured to perform a working frequency adjustment for at least one processor core according to the available power and frequency adjustment priorities of the plurality of processor cores, or performing power-on/power-off processing for the at least one processor core based on the available power.

In an implementation of the embodiments of the present invention, the apparatus further includes a fourth determining module, configured to:
obtain a power consumption benefit corresponding to a frequency adjustment of each of the plurality of processor cores; and
determine the frequency adjustment priorities of the plurality of processor cores according to power consumption benefit corresponding to frequency adjustments of the plurality of processor cores.

In an implementation of the embodiments of the present invention, the fourth determining module is further configured to:
determine the frequency adjustment priorities of the plurality of processor cores according to a target scenario.

In an implementation of the embodiments of the present invention, the adjusting module 1204 is further configured to:
determine a frequency adjustment direction according to the available power; and
adjust, according to the frequency adjustment priorities, the at least one processor core to an expected working frequency along the frequency adjustment direction, in which the expected working frequency is determined based on the target scenario.

In an implementation of the embodiments of the present invention, the adjusting module 1204 is further configured to:
determine a frequency adjustment direction according to the available power; and
perform the working frequency adjustment along the frequency adjustment direction according to the frequency adjustment priorities and according to a target energy efficiency working frequency of the at least one processor core, until a working frequency of the at least one processor core is adjusted to the target energy efficiency working frequency or a total power of the plurality of processor cores in the electronic device is less than or equal to the available power.

In an implementation of the embodiments of the present invention, the adjusting module 1204 is further configured to:
determine a frequency adjustment direction according to the available power; and
perform the working frequency adjustment for the at least one processor core along the frequency adjustment direction according to the frequency adjustment priorities and according to an extreme value working frequency of the at least one processor core, until a working frequency of the at least one processor core is adjusted to the extreme value working frequency or a total power of the plurality of processor cores in the electronic device is less than or equal to the available power.

In an implementation of the embodiments of the present invention, the plurality of processor cores include a core corresponding to at least one processor of a GPU, an NPU, a CPU, a DPU, or an ISP.

It needs to be noted that the above explanations of the method embodiments also apply to the apparatus of this embodiment, which will not be repeated here.

In the apparatus for controlling power consumption in the embodiments of the present invention, based on the current allocable power of the electronic device, the power of the component of the first type in the electronic device is dynamically adjusted, which achieves flexible power consumption control based on the allocable power. Under a premise of meeting the power consumption requirement of the target scenario, an optimal ratio of the power allocation is achieved. When a device in the related art and a device in the present invention are in the same battery state, the device in the present invention has a better performance and a longer battery life compared to the device in the related art in the same target scenario. Meanwhile, by intelligently and dynamically adjusting the power consumption, refined management of the power consumption is realized, and thus overall machine performance is improved.

To achieve the above embodiments, the present invention also provides a non-transitory computer-readable storage medium storing a computer program that, when executed by a processor, implements the method described in the above method embodiments.

To achieve the above embodiments, the present invention also provides a computer program product storing a computer program that, when executed by a processor, implements the method described in the above method embodiments.

To achieve the above embodiments, the present invention also provides an electronic device, including a memory, a processor, and a computer program stored on the memory and executable on the processor. When the program is executed by the processor, the method described in the above method embodiments is implemented.

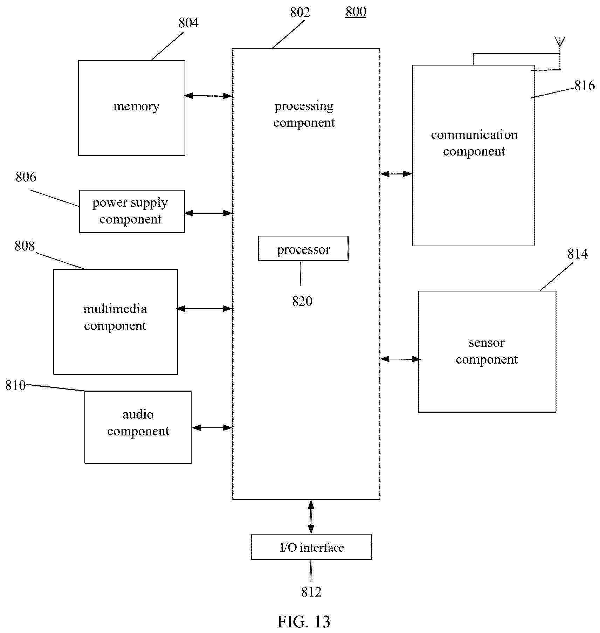

FIG. 13 is a block diagram of an electronic device according to the embodiments of the present invention. For example, the electronic device 800 may be a mobile phone, a computer, a digital broadcast terminal, a message sending and receiving device, a game console, a tablet device, a medical device, a fitness device, a personal digital assistant, etc.

Referring to FIG. 13, the electronic device 800 may include one or more components of: a processing component 802, a memory 804, a power supply component 806, a multimedia component 808, an audio component 810, an input/output (I/O) interface 812, a sensor component 814, and a communication component 816.

The processing component 802 typically controls the overall operation of the electronic device 800, such as those associated with an on-screen display, a telephone call, a data communication, a camera operation, and a recording operation. The processing component 802 may include one or more processors 820 to execute instructions to generate all or part of steps of the above method. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the electronic device 800. Examples of these data include instructions of any application or method used to operate on the electronic device 800, contact data, phone book data, messages, pictures, videos, etc. The memory 804 may be implemented by any type of volatile or non-volatile memory or a combination of them, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD.

The power supply component 806 provides power to the various components of the electronic device 800. The power supply component 806 may include a power management system, one or more power supplies, and other components associated with generating, managing, and distributing power for the electronic device 800.

The multimedia component 808 includes a screen that provides an output interface between the electronic device 800 and the user. In some embodiments, the screen may include a liquid crystal display (LCD) and a touch panel (TP). If the screen includes a TP, the screen may be a touch screen to receive signals input by the user. The touch panel includes one or more touch sensors to sense a touch, swiping, and gesture on the touch panel. The touch sensor may not only sense the boundary of a touch or sliding action, but also detect the duration and pressure associated with the touch or sliding operation. In some embodiments, the multimedia component 808 includes a front camera and/or a rear camera. When the electronic device 800 is in an operating mode, such as a shooting mode or a video mode, the front camera and/or the rear camera may receive external multimedia data. Each front camera or each rear camera may be a fixed optical lens system or has a focal length and an optical zoom capability.

The audio component 810 is configured to output and/or input audio signals. For example, the audio component 810 includes a microphone (MIC) that is configured to receive external audio signals when the electronic device 800 is in an operational mode, such as a call mode, a recording mode, and a speech recognition mode. The received audio signal may be further stored in the memory 804 or transmitted via a communication component 816. In some embodiments, the audio component 810 also includes a speaker for the output of an audio signal.

The I/O interface 812 provides an interface between the processing component 802 and a peripheral interface module. The peripheral interface module may be a keyboard, a click wheel, a button, etc. The button may include, but is not limited to: a home button, a volume button, a start button, and a locking button.

The sensor component 814 includes one or more sensors to provide a condition assessment of various aspects of the electronic device 800. For example, the sensor component 814 may detect an on/off state of the electronic device 800, and a relative positioning of the component. For example, the component is a display and a keypad of the electronic device 800, the sensor component 814 may also detect a change of the position of the electronic device 800 or a change of one component of the electronic device 800, detect a presence or an absence of a contact between the user and with the electronic device 800, detect a direction of the electronic device 800, or detect an acceleration/deceleration and detect a temperature change of the electronic device 800. The sensor component 814 may include a proximity sensor configured to detect the presence of nearby objects without any physical contact. The sensor component 814 may also include an optical sensor, such as a CMOS or CCD image sensor, for using in an imaging application. In some embodiments, the sensor component 814 may also include an acceleration sensor, a gyroscope sensor, a magnetic sensor, a pressure sensor, or a temperature sensor.

The communication component 816 is configured to facilitate a wired or wireless communication between the electronic device 800 and other devices. The electronic device 800 may access a wireless network based on a communication standard, such as WiFi, 4G or 5G, or a combination of them. In one exemplary embodiment, the communication component 816 receives a broadcast signal or broadcast-related information from an external broadcast management system via a broadcast channel. In an exemplary embodiment, the communication component 816 also includes a near-field communication (NFC) module to facilitate a short-range communication. For example, the NFC module may be implemented based on a radio frequency identification (RFID) technology, an infrared data association (IrDA) technology, an ultra-wide band (UWB) technology, a bluetooth (BT) technology and other technologies.

In exemplary embodiments, the electronic device 800 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic components to perform the above methods.

In exemplary embodiments, a non-transitory computer-readable storage medium including instructions is also provided, such as a memory 804 including instructions. The instructions may be executed by the processor 820 of the electronic device 800 to implement the above methods. For example, the non-transitory computer-readable storage medium may be a read-only memory (ROM), a random access memory (RAM), a compact disc read-only memory (CD-ROM), a magnetic tape, a floppy disk, and an optical data storage device.

To achieve the above embodiments, the present invention also provides a chip. The chip includes a component of a first type and a processor. The processor is configured to receive a signal from a memory of an electronic device. The signal includes computer instructions stored in the memory. When the computer instructions are executed by the processor, the electronic device is caused to implement the method in the above method embodiments.

The processor may be a small core in the CPU or a small chip based on an RISC architecture. The small core refers to a processor core whose processing capability is below the preset threshold.

Reference throughout this specification to "an embodiment," "some embodiments," "an example," "a specific example," or "some examples," means that a particular feature, structure, material, or characteristic described in connection with the embodiment or example is included in at least one embodiment or example of the present invention. The appearances of the above phrases in various places throughout this specification are not necessarily referring to the same embodiment or example of the present invention. Furthermore, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

In addition, terms such as "first" and "second" are used herein for purposes of description and are not intended to indicate or imply relative importance or significance. Thus, the feature defined with "first" and "second" may include one or more this feature. In the description of the present invention, "a plurality of" means at least two, for example, two or three, unless specified otherwise.

Any procedure or method described in the flowcharts or described in other ways herein may be understood as including one or more modules, portions or parts for executing instruction codes that implement steps of a customized logic function or procedure. And preferable embodiments of the present invention include other implementations, in which the order of execution may be different from what is described or discussed, including executing functions in a substantially simultaneous manner or in an opposite order according to the related functions, which may be understood by the skilled in the art of embodiments of the present invention.

The logic and/or step described in other manners herein or shown in the flow chart, for example, a particular sequence table of executable instructions for realizing the logical function, may be specifically achieved in any computer readable medium to be used by the instruction execution system, device or equipment (such as a system based on computers, a system including processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples (non-exhaustive list) of the computer readable medium include but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It needs to be understood that each part of the present invention may be realized by hardware, software, firmware or their combination. In the above embodiments, a plurality of steps or methods may be realized by software or firmware stored in the memory and executed by the appropriate instruction execution system. For example, if it is realized by hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

The skilled in the art may understand that implementing all or a part of steps carried by the method of the above embodiments may be completed by a program indicating the related hardware. The program may be stored in a computer readable storage medium. The program includes one of the embodiments of the method or the combination thereof when being executed.

In addition, respective function units in respective embodiments of the present invention may be integrated in one processing unit, or each unit may also exist physically alone, or two or more units may be integrated in one unit. The above integrated unit may be implemented either in hardware or software functional units. If the integrated unit is implemented as a software functional unit and is sold or used as a stand-alone product, it may be stored in a computer readable storage medium.

The above mentioned storage medium may be a ROM, a disk or a disc. Although embodiments of the present invention have been shown and described above, it may be understood that the above embodiments are exemplary, and may not be understood to limit the present invention. Those skilled in the art may make changes, alternatives, and modifications in the above embodiments within scope of the present invention.

## Claims

1. A method for controlling power consumption, comprising:
performing (101), based on an allocable power of an electronic device, power allocation for a component of a first type in the electronic device to meet a power consumption requirement of a target scenario, wherein the component of the first type comprises a system-on-chip.

2. The method of claim 1, further comprising:
determining (201, 401, 501, 601, 701, 801, 901) the allocable power according to battery state information of the electronic device.

3. The method of claim 1, wherein performing (101), based on the allocable power of the electronic device, the power allocation for the component of the first type in the electronic device comprises:
determining (202, 402, 502, 602, 702, 802, 902) a power required by a component of a second type in the electronic device;
determining (203, 403, 503, 603, 703, 803, 903) an available power of the component of the first type according to the allocable power of the electronic device and the power required by the component of the second type; and
performing (204) the power allocation for the component of the first type based on the available power of the component of the first type;
optionally, wherein the component of the second type comprises a basic component of the electronic device;
optionally, wherein performing (204) the power allocation for the component of the first type based on the available power of the component of the first type comprises:
determining (404) an allocation strategy for performing the power allocation for the component of the first type; and
performing (405) the power allocation for the component of the first type based on the allocation strategy and the available power of the component of the first type.

4. The method of claim 3, wherein the allocation strategy comprises at least one of:
a power-on/power-off processing manner; or
a working frequency adjustment manner.

5. The method of claim 3, wherein performing (405) the power allocation for the component of the first type based on the allocation strategy and the available power of the component of the first type comprises:
in response to the allocation strategy comprising the power-on/power-off processing manner, performing (905) power-on/power-off processing for at least a part of components in components of the first type based on the available power of the components of the first type;
optionally, the method further comprises:.
in response to there being a component of the first type in a powered-on state, performing (906) a working frequency adjustment for the component of the first type in the powered-on state based on the available power.

6. The method of claim 4, wherein there are at least two components of the first type, and performing (405) the power allocation for the component of the first type based on the allocation strategy and the available power of the component of the first type comprises:
in response to the allocation strategy comprising the working frequency adjustment manner, determining (505, 605, 705) frequency adjustment priorities of the at least two components of the first type; and
performing (506) a working frequency adjustment for at least one component of the first type according to the available power and the frequency adjustment priorities of the at least two components of the first type;
optionally, wherein determining (505, 605, 705) the frequency adjustment priorities of the at least two components of the first type comprises:
obtaining a power consumption benefit corresponding to a frequency adjustment of each component of the first type; and determining the frequency adjustment priorities of the at least two components of the first type according to a power consumption benefit corresponding to frequency adjustments of the at least two components of the first type; or
determining the frequency adjustment priorities of the at least two components of the first type according to the target scenario.

7. The method of claim 6, wherein performing (506) the working frequency adjustment for the at least one component of the first type according to the available power and the frequency adjustment priorities of the at least two components of the first type comprises:
determining (606) a frequency adjustment direction according to the available power; and adjusting (607), according to the frequency adjustment priorities, the at least one component of the first type to an expected working frequency along the frequency adjustment direction, wherein the expected working frequency is determined based on the target scenario; or
determining (706) a frequency adjustment direction according to the available power; and performing (707) the working frequency adjustment along the frequency adjustment direction according to the frequency adjustment priorities and according to a target energy efficiency working frequency of the at least one component of the first type, until a working frequency of the at least one component of the first type is adjusted to the target energy efficiency working frequency or a total power of the components of the first type in the electronic device is less than or equal to the available power; or
determining (806) a frequency adjustment direction according to the available power; and performing (807) the working frequency adjustment for the at least one component of the first type along the frequency adjustment direction according to the frequency adjustment priorities and according to an extreme value working frequency of the at least one component of the first type, until a working frequency of the at least one component of the first type is adjusted to the extreme value working frequency or a total power of the components of the first type in the electronic device is less than or equal to the available power.

8. The method of claim 7, wherein determining (606, 706, 806) the frequency adjustment direction according to the available power comprises:
determining a current power corresponding to the at least two components of the first type according to current working parameters of the at least two components of the first type; and
determining the frequency adjustment direction according to a magnitude relationship between the current power and the available power.

9. The method of claim 7 or 8, further comprising:
determining the target energy efficiency working frequency based on the target scenario.

10. The method of claim 7 or 8, further comprising:
in response to the allocable power being less than a preset threshold, adjusting a maximum working frequency of the at least one component of the first type according to the target scenario and the allocable power, wherein an adjusted maximum working frequency is configured to determine a maximum working frequency in a frequency-increasing scenario.

11. A method for controlling power consumption, comprising:
determining (1001) an allocable power of an electronic device according to battery state information of the electronic device;
determining (1002) a power required by a basic component in the electronic device;
determining (1003) an available power for a system-on-chip according to the allocable power of the electronic device and the power required by the basic component, wherein the system-on-chip comprises a plurality of processor cores; and
performing (1004) a working frequency adjustment for at least one processor core according to the available power and frequency adjustment priorities of the plurality of processor cores, or performing power-on/power-off processing for the at least one processor core based on the available power.

12. The method of claim 11, further comprising:
obtaining a power consumption benefit corresponding to a frequency adjustment of each of the plurality of processor cores; and determining the frequency adjustment priorities of the plurality of processor cores according to a power consumption benefit corresponding to frequency adjustments of the plurality of processor cores; or.
determining the frequency adjustment priorities of the plurality of processor cores according to a target scenario.

13. An electronic device, comprising a memory, a processor, and a computer program stored in the memory and executable on the processor, wherein the processor, when executing the computer program, implements the method of any one of claims 1 to 10, or the method of any one of claims 11 to 12.

14. A chip, comprising a component of a first type and a processor, wherein the processor is configured to receive a signal from a memory of an electronic device and the signal comprises computer instructions stored in the memory, and when the computer instructions are executed by the processor, the electronic device is caused to implement the method of any one of claims 1 to 10, or the method of any one of claims 11 to 12.

15. A non-transitory computer-readable storage medium storing a computer program that, when executed by a processor, implements the method of any one of claims 1 to 10, or the method of any one of claims 11 to 12.
